(19) Europäisches Patentamt
European Patent Office
Office européen des brevets

(11) **EP 4 450 894 B1**

(12) **EUROPEAN PATENT SPECIFICATION**

(45) Date of publication and mention
of the grant of the patent:
**18.03.2026   Bulletin 2026/12**

(21) Application number: **22907337.4**

(22) Date of filing: **08.12.2022**

(51) International Patent Classification (IPC):
$F25B\ 13/00^{(2006.01)}$     $C09K\ 5/04^{(2006.01)}$
$C10M\ 105/38^{(2006.01)}$     $C10M\ 107/24^{(2006.01)}$
$F25B\ 31/00^{(2006.01)}$     $C10N\ 30/00^{(2006.01)}$
$C10N\ 40/30^{(2006.01)}$     $C10M\ 171/00^{(2006.01)}$

(52) Cooperative Patent Classification (CPC):
**C09K 5/045;** C09K 2205/126; C09K 2205/22;
F25B 13/00; F25B 31/002

(86) International application number:
**PCT/JP2022/045214**

(87) International publication number:
**WO 2023/112810 (22.06.2023 Gazette 2023/25)**

(54) **USAGE AS REFRIGERANT IN REFRIGERATION CYCLE DEVICE**

VERWENDUNG ALS KÄLTEMITTEL IN EINER KÄLTEKREISLAUFVORRICHTUNG

UTILISATION DE FLUIDE FRIGORIGÈNE DANS UN DISPOSITIF À CYCLE FRIGORIFIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **14.12.2021   JP 2021202400**

(43) Date of publication of application:
**23.10.2024   Bulletin 2024/43**

(60) Divisional application:
**26155271.5**

(73) Proprietor: **DAIKIN INDUSTRIES, LTD.**
**Osaka-shi, Osaka 530-0001 (JP)**

(72) Inventor: **KAWAE, Arisa**
**Osaka-shi, Osaka 530-0001 (JP)**

(74) Representative: **Hoffmann Eitle**
**Patent- und Rechtsanwälte PartmbB**
**Arabellastraße 30**
**81925 München (DE)**

(56) References cited:
**WO-A1-2020/008520      WO-A1-2020/255966**
**JP-A- 2021 036 193**

**Description**

**TECHNICAL FIELD**

The present invention relates to a use as a refrigerant in a refrigeration cycle apparatus.

**BACKGROUND ART**

For refrigeration apparatuses, hydrofluoroolefin (HFO refrigerant) having lower global warming potential (hereinafter may be simply referred to as GWP) than a HFC refrigerant have been focused, and, for example, 1,2-difluoroethylene (HFO-1132) has been studied as a refrigerant having low GWP in JP 2019 196312 A.

Further examples of previously known uses are derivable from JP 2021 36 193 A, WO 2020/008520 A1, and WO 2020/255966 A1.

**SUMMARY OF THE INVENTION**

<Technical Problem>

Such an HFO refrigerant has low GWP but is low in stability and thus has a likelihood of decomposing under a certain condition and generating highly corrosive hydrogen fluoride.

<Solution to Problem>

This problem is resolved by means of a use according to independent claim 1. Distinct embodiments are derivable from the dependent claims.

A use as a refrigerant in a refrigeration cycle apparatus according to a first aspect is a use of at least one of a mixed refrigerant containing 1,2-difluoroethylene and one or more types of hydrofluorocarbon, or a mixed refrigerant containing 1,2-difluoroethylene and one or more types of hydrofluoroolefin, as the refrigerant in the refrigeration cycle apparatus. The refrigeration cycle apparatus includes a refrigerant circuit including a compressor. The compressor includes a compression element that compresses the refrigerant, and an oil reservoir that stores a refrigerating machine oil. The pressure of air inside the refrigerant circuit is 667 Pa or less. The refrigerating machine oil contains 3.0 wt% or more and 5.0 wt% or less of an acid scavenger. The temperature of the refrigerating machine oil in the oil reservoir is maintained at 120°C or lower.

The content ratio of the acid scavenger in the refrigerating machine oil is a ratio when the refrigerating machine oil is considered 100 parts by weight.

According to this use as the refrigerant in the refrigeration cycle apparatus, decomposition of the refrigerant can be suppressed, and occurrence of corrosion in the refrigerant circuit can be suppressed.

A use as a refrigerant in a refrigeration cycle apparatus according to a second aspect is a use of at least one of a mixed refrigerant containing 1,2-difluoroethylene and one or more types of hydrofluorocarbon, or a mixed refrigerant containing 1,2-difluoroethylene and one or more types of hydrofluoroolefin, as the refrigerant in the refrigeration cycle apparatus. The refrigeration cycle apparatus includes a refrigerant circuit including a compressor. The compressor includes a compression element that compresses the refrigerant, and an oil reservoir that stores a refrigerating machine oil. The pressure of air inside the refrigerant circuit is 1333 Pa or less. The refrigerating machine oil contains no acid scavenger or contains less than 3.0 wt% of an acid scavenger. The temperature of the refrigerating machine oil in the oil reservoir is maintained at 100°C or lower.

The content ratio of the acid scavenger in the refrigerating machine oil is a ratio when the refrigerating machine oil is considered 100 parts by weight.

According to this use as the refrigerant in the refrigeration cycle apparatus, decomposition of the refrigerant can be suppressed, and occurrence of corrosion in the refrigerant circuit can be suppressed.

A use as a refrigerant in a refrigeration cycle apparatus according to a third aspect is a use of at least one of a mixed refrigerant containing 1,2-difluoroethylene and one or more types of hydrofluorocarbon, or a mixed refrigerant containing 1,2-difluoroethylene and one or more types of hydrofluoroolefin, as the refrigerant in the refrigerant. The refrigeration cycle apparatus includes a refrigerant circuit including a compressor. The compressor includes a compression element that compresses the refrigerant, and an oil reservoir that stores a refrigerating machine oil. The pressure of air inside the refrigerant circuit is 2000 Pa or less. The refrigerating machine oil contains 3.0 wt% or more and 5.0 wt% or less of an acid scavenger. The temperature of the refrigerating machine oil in the oil reservoir is maintained at 100°C or lower.

The content ratio of the acid scavenger in the refrigerating machine oil is a ratio when the refrigerating machine oil is considered 100 parts by weight.

According to this use as the refrigerant in the refrigeration cycle apparatus, decomposition of the refrigerant can be suppressed, and occurrence of corrosion in the refrigerant circuit can be suppressed.

A use as a refrigerant in a refrigeration cycle apparatus according to a fourth aspect is a use of at least one of a mixed refrigerant containing 1,2-difluoroethylene and one or more types of hydrofluorocarbon, or a mixed refrigerant containing 1,2-difluoroethylene and one or more types of hydrofluoroolefin, as the refrigerant in the refrigeration cycle apparatus. The refrigeration cycle apparatus includes a refrigerant circuit including a compressor. The compressor includes a compression element that compresses the refrigerant, and an oil reservoir that stores a refrigerating machine oil. The pressure of air inside the refrigerant circuit is 2000 Pa or less. The refrigerating machine oil contains no acid scavenger or contains less than 3.0 wt% of an acid scavenger. The temperature of the refrigerating machine oil in the oil reservoir is maintained at 80°C or lower.

The content ratio of the acid scavenger in the refrigerating machine oil is a ratio when the refrigerating machine oil is considered 100 parts by weight.

According to this use as the refrigerant in the refrigeration cycle apparatus, decomposition of the refrigerant can be suppressed, and occurrence of corrosion in the refrigerant circuit can be suppressed.

A use as a refrigerant in a refrigeration according to a fifth aspect is a use of at least one of a mixed refrigerant containing 1,2-difluoroethylene and one or more types of hydrofluorocarbon, or a mixed refrigerant containing 1,2-difluoroethylene and one or more types of hydrofluoroolefin, as the refrigerant in the refrigeration cycle apparatus. The refrigeration cycle apparatus includes a refrigerant circuit including a compressor. The compressor includes a compression element that compresses the refrigerant, and an oil reservoir that stores a refrigerating machine oil. The pressure of air inside the refrigerant circuit is 4000 Pa or less. The refrigerating machine oil contains 3.0 wt% or more and 5.0 wt% or less of an acid scavenger. The temperature of the refrigerating machine oil in the oil reservoir is maintained at 80°C or lower.

The content ratio of the acid scavenger in the refrigerating machine oil is a ratio when the refrigerating machine oil is considered 100 parts by weight.

According to this use as the refrigerant in the refrigeration cycle apparatus, decomposition of the refrigerant can be suppressed, and occurrence of corrosion in the refrigerant circuit can be suppressed.

A use as a refrigerant in a refrigeration cycle apparatus according to a sixth aspect is the use as the refrigerant in the refrigeration cycle apparatus according to any one of first to fifth aspects, wherein the temperature of the refrigerating machine oil in the oil reservoir is maintained to be less than or equal to a value obtained by substituting the pressure of the air inside the refrigerant circuit into an equation below.

$$0.1 = ((8 \times 10^{-5} \times 133.322 \times \text{pressure of air (Pa)}) + 0.0017) \times (\text{temperature of refrigerating machine oil (°C)}) + (-0.0032 \times 133.322 \times \text{pressure of air (Pa)} - 0.15)$$

According to this use as the refrigerant in the refrigeration cycle apparatus, decomposition of the refrigerant can be further suppressed, and occurrence of corrosion in the refrigerant circuit is sufficiently suppressed.

A use as a refrigerant in a refrigeration cycle apparatus according to a seventh aspect is the use as the refrigerant in the refrigeration cycle apparatus according to any one of the first to sixth aspects, wherein at least one of polyvinyl ether and polyol ester is included in the refrigerating machine oil.

A use as a refrigerant in a refrigeration cycle apparatus according to an eighth aspect is the use as the refrigerant in the refrigeration cycle apparatus according to any one of the first to seventh aspects, an amount of moisture inside the refrigerant circuit being 300 ppm or less with respect to an amount of the refrigerant enclosed in the refrigerant circuit.

This use as the refrigerant in the refrigeration cycle apparatus suppresses corrosion due to the presence of moisture in the refrigerant circuit.

A use as a refrigerant in a refrigeration cycle apparatus according to a ninth aspect is the use as the refrigerant in the refrigeration cycle apparatus according to one of the first to eighth aspects, whereun the refrigerant circuit has an expansion valve that includes a needle portion. The needle portion is made of SUS or brass.

The SUS may be, for example, stainless steel that is steel whose chromium content is 10.5 mass% or more and carbon content is 1.2 mass% or less.

The brass may be, for example, a copper-zinc alloy containing 20 mass% or more of zinc.

This use as the refrigerant in the refrigeration cycle apparatus suppresses corrosion of the needle portion, even when the needle portion made of SUS or brass is used.

A use as a refrigerant in a refrigeration cycle apparatus according to a tenth aspect is the use as the refrigerant in the refrigeration cycle apparatus according to any one of the first to ninth aspects, wherein the refrigerant is one of a refrigerant that is made of 1,2-difluoroethylene and R32, a refrigerant that is made of 1,2-difluoroethylene and R1234yf, a refrigerant that is made of 1,2-difluoroethylene, R32, and R1234yf, and a refrigerant that is made of R1234yf, R1234ze, R1233zd, and a hydrofluorocarbon.

A use as a refrigerant in a refrigeration cycle apparatus according to an eleventh aspect is the use as the refrigerant in the refrigeration cycle apparatus according to any one of the first to tenth aspects, wherein the refrigeration cycle apparatus has a temperature detection unit that detects the temperature of the refrigerating machine oil in the oil reservoir. In the refrigeration cycle apparatus, the number of rotations of the compressor is controlled on the basis of a result of detection by the temperature detection unit.

The refrigeration cycle apparatus may include a control unit including a processor or the like that grasps a result of detection by the temperature detection unit and controls the number of rotations of the compressor on the basis of the result of the detection.

This use as the refrigerant in the refrigeration cycle apparatus can easily suppress decomposition of the refrigerant.

## BRIEF DESCRIPTION OF THE DRAWINGS

Fig. 1 is a schematic configration diagram of an air conditioning apparatus.
Fig. 2 is a schematic block configration diagram of an air conditioning apparatus.
Fig. 3 is a schematic sectional configration diagram of a compressor.
Fig. 4 is a schematic sectional configration diagram of an expansion valve.
Fig. 5 is a graph showing a relationship between temperatures of a discharge gas and acid values at each air pressure when 3 wt% of an acid scavenger is blended.
Fig. 6 is a graph showing a relationship between temperatures of a discharge gas and acid values at each air pressure when 2 wt% of an acid scavenger is blended.
Fig. 7 is a schematic configration diagram of an air conditioning apparatus according to another embodiment J.
Fig. 8 is a schematic configration sectional diagram of a compressor according to the other embodiment J.
Fig. 9 is an enlarged view of the periphery of a floating member of the compressor according to the other embodiment J.
Fig. 10 is a graph showing a relationship between temperatures of a discharge gas and acid values when the air pressure in a refrigerant circuit according to the other embodiment J is different.

## DESCRIPTION OF EMBODIMENTS

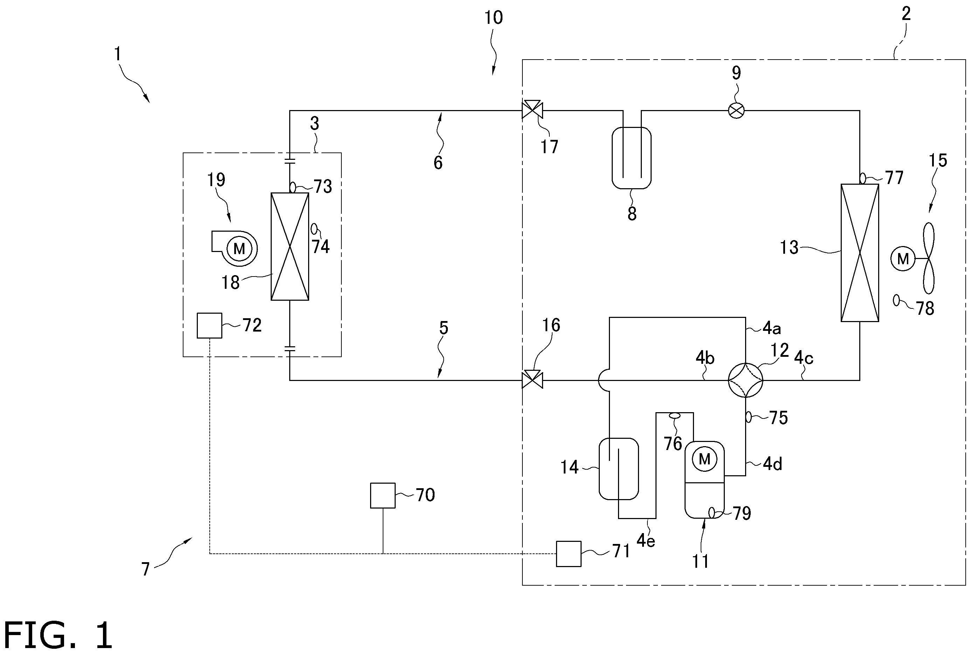

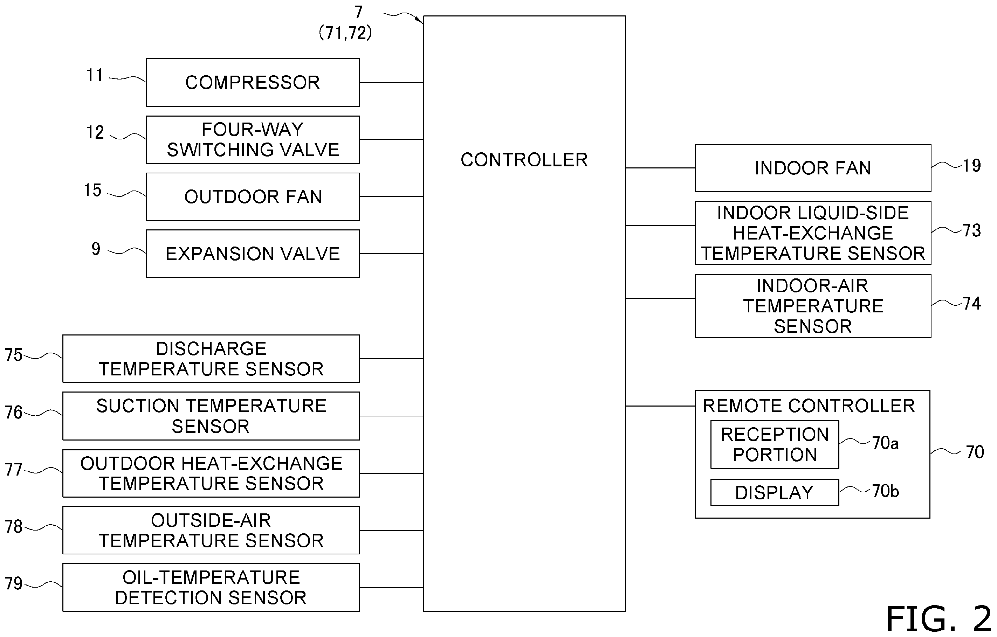

Hereinafter, an air conditioning apparatus 1 as a refrigeration cycle apparatus according to the present embodiment will be described with reference to Fig. 1, which is a schematic configration diagram of a refrigerant circuit, and Fig. 2, which is a schematic control block configration diagram.

(1) Overview of Air Conditioning Apparatus 1

The air conditioning apparatus 1 is an apparatus that conditions air in a target space by performing a vapor compression refrigeration cycle.

The air conditioning apparatus 1 includes, mainly, an outdoor unit 2, an indoor unit 3, a liquid-refrigerant connection pipe 6 and a gas-refrigerant connection pipe 5 that connect the outdoor unit 2 and the indoor unit 3 to each other, and a controller 7 that controls the operation of the air conditioning apparatus 1.

The air conditioning apparatus 1 performs a refrigeration cycle in which a refrigerant sealed in the refrigerant circuit 10 is compressed, condensed, radiates heat, is decompressed, evaporated, and then compressed again. In the present embodiment, the refrigerant circuit 10 is filled with a refrigerant for performing a vapor compression refrigeration cycle.

(Refrigerant)

The refrigerant with which the refrigerant circuit 10 is filled is at least one of a mixed refrigerant containing 1,2-difluoroethylene and one or more types of hydrofluorocarbon, or a mixed refrigerant containing 1,2-difluoroethylene and one or more types of hydrofluoroolefin. Since 1,2-difluoroethylene or other hydrofluoroolefin has low GWP, global warming is suppressed. In addition, 1,2-difluoroethylene and other hydrofluoroolefin are low in stability and easily decomposes due to a disproportionation reaction or the like, in particular, easily decomposes or deteriorates by being present with a refrigerating machine oil having a high temperature. However, deterioration and decomposition of a refrigerant are suppressed in the air conditioning apparatus 1 in the present embodiment, since the pressure of air inside the refrigerant circuit 10 is 667 Pa or less, a refrigerating machine oil contains 3.0 wt% or more and 5.0 wt% or less of an acid scavenger, and the temperature of the refrigerating machine oil in an oil reservoir, which is described later, is maintained at 120°C or lower.

The mixed refrigerant containing 1,2-difluoroethylene and one or more types of hydrofluorocarbon is, for example, a mixed refrigerant that contains 1,2-difluoroethylene and R32, a mixed refrigerant that is made of only 1,2-difluoroethylene and R32, a mixed refrigerant that contains 1,2-difluoroethylene, R32, and R1234yf, or a mixed refrigerant that is made of only 1,2-difluoroethylene, R32, and R1234yf.

The mixed refrigerant containing 1,2-difluoroethylene and one or more types of hydrofluoroolefin is, for example, a mixed refrigerant that contains 1,2-difluoroethylene and R1234yf, a mixed refrigerant that is made of only 1,2-difluoroethylene and R1234yf, a mixed refrigerant that contains 1,2-difluoroethylene, R32, and R1234yf, or a mixed refrigerant that is made of only 1,2-difluoroethylene, R32, and R1234yf.

(Refrigerating Machine Oil)

A refrigerating machine oil is enclosed together with the refrigerant in the refrigerant circuit 10. The refrigerating machine oil used together with the refrigerant is preferably an ether oil or an ester oil. The ether oil is, for example, a polyvinyl ether oil (PVE) or a polyoxyalkylene oil. The ester oil is, for example, a dibasic acid ester oil containing dibasic acid and monohydric alcohol, a polyol ester oil containing polyol and fatty acid, a complex ester oil containing polyol, polybasic acid, and monohydric alcohol (or fatty acid), a polyol carbonic acid ester oil, or the like. As the refrigerating machine oil, one type of a refrigerating machine oil may be solely used, or two or more types of refrigerating machine oils may be used in combination.

In the present embodiment, 3.0 wt% or more and 5.0 wt% or less of the acid scavenger is blended in the refrigerating machine oil. Consequently, corrosion of the refrigerant circuit 10 due to an acid that may be generated by decomposition of the refrigerant is suppressed. The blending amount of the acid scavenger can be, for example, a value obtained by measuring the refrigerating machine oil stored in an oil reservoir 37 of a compressor 11 in the refrigerant circuit 10 of the air conditioning apparatus 1 whose operation is stopped. As such an acid scavenger, phenyl glycidyl ether, alkyl glycidyl ether, alkylene glycol glycidyl ether, cyclohexene oxide, $\alpha$-olefin oxide, an epoxy compound such as an epoxidized soybean oil, carbodiimide, or the like is usable. Among these, phenyl glycidyl ether, alkyl glycidyl ether, alkylene glycol glycidyl ether, cyclohexene oxide, or $\alpha$-olefin oxide is preferable from the point of view of compatibility. The carbon number of each of these acid scavengers is preferably 3 or more and 30 or less and is more preferably 4 or more and 24 or less. The total carbon number of $\alpha$-olefin oxide is 4 or more and 50 or less and is more preferably 4 or more and 24 or less. As the acid scavenger, only one type of acid scavengers may be used, or multiple types may be used in combination.

Additionally, the refrigerating machine oil can further contain at least one or more types of additives selected from the group consisting of an extreme pressure agent and an antioxidant. For example, 3 wt% or less of these additives are preferably blended in the refrigerating machine oil. By adjusting the blending amount of the antioxidant or the acid scavenger, the moisture content in a fluid including the refrigerant and the refrigerating machine oil is easily adjusted.

The extreme pressure agent includes, for example, an extreme pressure agent containing phosphoric acid esters; an extreme pressure agent based on an organosulfur compound such as monosulfides, polysulfides, sulfoxides, sulfones, thiosulfinates, sulfurized fats and oils, thiocarbonates, thiophenes, thiazoles, or methanesulfonic acid esters; an extreme pressure agent based on a thiophosphoric acid ester such as thiophosphoric acid triesters; an extreme pressure agent based on an ester such as a higher fatty acid, hydroxyaryl fatty acids, polyhydric alcohol esters, or acrylic acid esters; an extreme pressure agent based on an organochlorine such as chlorinated hydrocarbons, such as chlorinated paraffin, or a chlorinated carboxylic acid derivative; an extreme pressure agent based on a fluoroorganic compound such as fluorinated aliphatic carboxylic acids, fluorinated ethylene resins, fluorinated alkylpolysiloxanes, or fluorinated graphite; an extreme pressure agent based on alcohol such as higher alcohol; or an extreme pressure agent based on a metal compound such as naphthenic acid salts (lead naphthenate and the like), fatty acid salts (lead fatty acid and the like), thiophosphoric acid salts (zinc dialkyldithiophosphate and the like), thiocarbamic acid salts, an organomolybdenum compound, an organotin compound, an organogermanium compound, or a boric acid ester.

As the antioxidant, for example, a phenol-based antioxidant or an amine-based antioxidant is usable. The phenol-based antioxidant includes 2,6-di-tert-butyl-4-methylphenol (DBPC), 2,6-di-tert-butyl-4-ethylphenol, 2,2'-methylenebis(4-methyl-6-tert-butylphenol), 2,4-dimethyl-6-tert-butylphenol, 2,6-di-tert-buthylphenol, di-tert-butyl-p-cresol, bisphenol A, or the like. The amine-based antioxidant includes N,N'-diisopropyl-p-phenylenediamine, N,N'-di-sec-butyl-p-phenylenediamine, phenyl-$\alpha$-naphthylamine, N.N'-di-phenyl-p-phenylenediamine, N,N-di(2-naphthyl)-p-phenylenediamine, or the like.

The moisture content inside the refrigerant circuit 10 is preferably 300 ppm or less from the point of view of suppression of decomposition of 1,2-difluoroethylene and other hydrofluoroolefin.

The pressure of air inside the refrigerant circuit 10 is 667 Pa (5 Torr) or less from the point of view of suppression of decomposition of the 1,2-difluoroethylene and other hydrofluoroolefin.

The moisture content and the pressure of air inside the refrigerant circuit 10 can be, for example, values of a fluid at an outlet of a heat exchanger (an indoor heat exchanger 18 or an outdoor heat exchanger 13) functioning as a condenser for the refrigerant or of a fluid at an outlet of a high-pressure receiver 8, which is described later, in the refrigerant circuit 10 of the air conditioning apparatus 1 in an operation stop state.

(1-1) Outdoor Unit 2

The outdoor unit 2 is connected to the indoor unit 3 through the liquid-refrigerant connection pipe 6 and the gas-refrigerant connection pipe 5 and constitutes part of the refrigerant circuit 10. The outdoor unit 2 includes, mainly, the compressor 11, a four-way switching valve 12, the outdoor heat exchanger 13, an expansion valve 9, the high-pressure receiver 8, a low-pressure receiver 14, an outdoor fan 15, a liquid-side shutoff valve 17, and a gas-side shutoff valve 16.
The compressor 11 is an apparatus that compresses the low-pressure refrigerant in the refrigeration cycle, until the refrigerant becomes to have a high pressure. As the compressor 11, for example, a compressor in which a compression element of a rotary type, a scroll type, or the like is rotationally driven by a compressor motor is usable. Details of the compressor 11 in the present embodiment will be described later. The compressor motor is used to change capacity, and the operation frequency of the compressor motor can be controlled by an inverter. For example, the number of revolutions of the compressor 11 is controlled with a predetermined target evaporation temperature as a target value during a cooling operation, and the number of rotations of the compressor 11 is controlled with a predetermined target condensation temperature as a target value during a heating operation.
By switching the connection states in the refrigerant circuit 10, the four-way switching valve 12 is switchable between a first connection state (refer to the solid lines in Fig. 1) in which the suction side of the compressor 11 is connected to the gas-side shutoff valve 16 while the discharge side of the compressor 11 is connected to the outdoor heat exchanger 13 and a second connection state (refer to the dotted lines in Fig. 1) in which the suction side of the compressor 11 is connected to the outdoor heat exchanger 13 while the discharge side of the compressor 11 is connected to the gas-side shutoff valve 16.
The outdoor heat exchanger 13 is a heat exchanger that functions as a condenser or a radiator for the high-pressure refrigerant in the refrigeration cycle during a cooling operation and functions as an evaporator for the low-pressure refrigerant in the refrigeration cycle during a heating operation. The outdoor heat exchanger 13 includes a plurality of heat transfer tubes (not illustrated) in which the refrigerant flows, and a plurality of heat transfer fins (not illustrated) that are disposed with a gap therebetween, the gap allowing air to flow through the gap. The plurality of heat transfer tubes are arranged in the up-down direction, and the heat transfer tubes extend in the horizontal direction substantially. The plurality of heat transfer fins extending in the up-down direction are arranged in a direction in which the heat transfer tubes extend with a predetermined interval therebetween. The plurality of heat transfer fins and the plurality of heat transfer tubes are combined together such that the plurality of heat transfer tubes extend through the heat transfer fins.
The outdoor fan 15 generates an air flow for supplying outdoor air to the outdoor heat exchanger 13 inside the outdoor unit 2 and, after causing the outdoor air to exchange heat with the refrigerant in the outdoor heat exchanger 13, discharging the outdoor air to the outside of the outdoor unit 2. The outdoor fan 15 is rotationally driven by an outdoor fan motor.
The expansion valve 9 is provided between a liquid-side end portion of the outdoor heat exchanger 13 and the high-pressure receiver 8. The expansion valve 9 is, for example, an electronic expansion valve whose valve opening degree is adjustable by control. Details of the expansion valve 9 will be described later.
The high-pressure receiver 8 is provided between the expansion valve 9 and the liquid-side shutoff valve 17. The high-pressure receiver 8 is a refrigerant container capable of storing a surplus refrigerant as a liquid refrigerant.
The low-pressure receiver 14 is a refrigerant container that is provided between the suction side of the compressor 11 and one of connection ports of the four-way switching valve 12 and that is capable of storing, as a liquid refrigerant, a surplus refrigerant in the refrigerant circuit 10.
The liquid-side shutoff valve 17 is a manual valve that is disposed at a portion of the outdoor unit 2 connected to the liquid-refrigerant connection pipe 6.
The gas-side shutoff valve 16 is a manual valve that is disposed at a portion of the outdoor unit 2 connected to the gas-refrigerant connection pipe 5.
The outdoor unit 2 includes an outdoor-unit control unit 71 that controls the operation of each portion that constitutes the outdoor unit 2. The outdoor-unit control unit 71 includes a microcomputer including a CPU, a memory, and the like. The outdoor-unit control unit 71 is connected to an indoor-unit control unit 72 of each indoor unit 3 through a communication line, and transmits and receives a control signal and the like.
The outdoor unit 2 is provided with a discharge temperature sensor 75, a suction temperature sensor 76, an outdoor heat-exchange temperature sensor 77, an outside-air temperature sensor 78, an oil-temperature detection sensor 79, and the like. Each of these sensors is electrically connected to the outdoor-unit control unit 71 and transmits a detection signal to the outdoor-unit control unit 71. The discharge temperature sensor 75 detects the temperature of the refrigerant flowing in a discharge pipe 4d that connects the discharge side of the compressor 11 to one of the connection ports of the four-way switching valve 12. The suction temperature sensor 76 detects the temperature of the refrigerant flowing in, among suction flow paths that connect the suction side of the compressor 11 to one of the connection ports of the four-way switching valve 12, a suction pipe 4e extending from the low-pressure receiver 14 to the suction side of the compressor 11. The outdoor heat-exchange temperature sensor 77 detects the temperature of the refrigerant flowing at an outlet of the liquid side of the outdoor heat exchanger 13, the liquid side being a side opposite to the side to which a third pipe 4c is connected. The outside-air temperature sensor 78 detects the temperature of outside air before passing through the outdoor heat exchanger 13. The oil-temperature detection sensor 79 detects the temperature of the refrigerating machine oil stored in the oil reservoir 37 of the compressor 11.

(1-2) Indoor Unit 3

The indoor unit 3 is installed on a wall surface, a ceiling, or the like inside a room that is a target space. The indoor unit 3 is connected to the outdoor unit 2 through the liquid-refrigerant connection pipe 6 and the gas-refrigerant connection pipe 5 and constitutes a part of the refrigerant circuit 10.

The indoor unit 3 includes the indoor heat exchanger 18 and an indoor fan 19.

The indoor heat exchanger 18 is connected on the liquid side to the liquid-refrigerant connection pipe 6 and connected on the gas-side end to the gas-refrigerant connection pipe 5. The indoor heat exchanger 18 is a heat exchanger that functions as an evaporator for the low-pressure refrigerant in the refrigeration cycle during a cooling operation and functions as a condenser or a radiator for the high-pressure refrigerant in the refrigeration cycle during a heating operation.

The indoor fan 19 generates an air flow for suctioning air in a room that is an air-conditioning target space into the indoor unit 3 and, after causing the air to exchange heat with the refrigerant in the indoor heat exchanger 18, discharging the air to the outside of the indoor unit 3. The indoor fan 19 is driven to rotate by an indoor fan motor.

The indoor unit 3 includes the indoor-unit control unit 72 that controls the operation of each portion that constitutes the indoor unit 3. The indoor-unit control unit 72 includes a microcomputer including a CPU, a memory, and the like. The indoor-unit control unit 72 is connected to the outdoor-unit control unit 71 through a communication line, and transmits and receives a control signal and the like.

The indoor unit 3 is provided with an indoor liquid-side heat-exchange temperature sensor 73, an indoor-air temperature sensor 74, and the like. Each of these sensors is electrically connected to the indoor-unit control unit 72 and transmits a detection signal to the indoor-unit control unit 72. The indoor liquid-side heat-exchange temperature sensor 73 detects the temperature of the refrigerant flowing at an outlet of the liquid side of the indoor heat exchanger 18, the liquid side being a side opposite to the side to which the gas-refrigerant connection pipe 5 is connected. The indoor-air temperature sensor 74 detects the temperature of indoor air before passing through the indoor heat exchanger 18.

(1-3) Controller 7

In the air conditioning apparatus 1, the outdoor-unit control unit 71 and the indoor-unit control unit 72 are connected to each other through a communication line and thereby constitute the controller 7 that controls the operation of the air conditioning apparatus 1.

The controller 7 includes, mainly, a processor, such as a CPU (central processing unit), and a memory, such as a ROM and a RAM. Various kinds of processing and control by the controller 7 are implemented by the portions included in the outdoor-unit control unit 71 and/or the indoor-unit control unit 72 that integrally function.

The controller 7 controls the components of the refrigerant circuit 10 such that the temperature of the refrigerating machine oil stored in the oil reservoir 37 in the refrigerant circuit 10 of the air conditioning apparatus 1 is maintained at 120°C or lower. As such control, for example, the number of rotations of the compressor 11 is controlled such that the temperature of the refrigerating machine oil detected by the oil-temperature detection sensor 79 is maintained at 120°C or lower.

(1-4) Remote Controller 70

A remote controller 70 is disposed in a room that is an air-conditioning target space or in a specific space in a building including an air-conditioning target space, and is used for an operation control instruction and monitoring of the operational state of the air conditioning apparatus 1 by a user or the like.

The remote controller 70 includes a reception portion 70a, such as an operation button or a touch panel, for receiving an input of information by being operated by a user or the like, and a display 70b capable of displaying various items of information. The remote controller 70 is connected to each of the outdoor-unit control unit 71 and the indoor-unit control unit 72 through a communication line and capable of supplying information received by the reception portion 70a from a user to the controller 7. Information received from the controller 7 can be output at the display 70b.

The information to be received by the reception portion 70a from a user or the like is not limited and includes various kinds of information such as an instruction to execute a cooling operating mode, an instruction to execute a heating operating mode, an instruction to stop an operation, and specification of a set temperature. The information to be displayed on the display 70b is not limited and includes a state (cooling or heating) of a current operating mode, a set temperature, information indicating occurrence of various abnormalities, and the like.

(2) Structure of Compressor 11

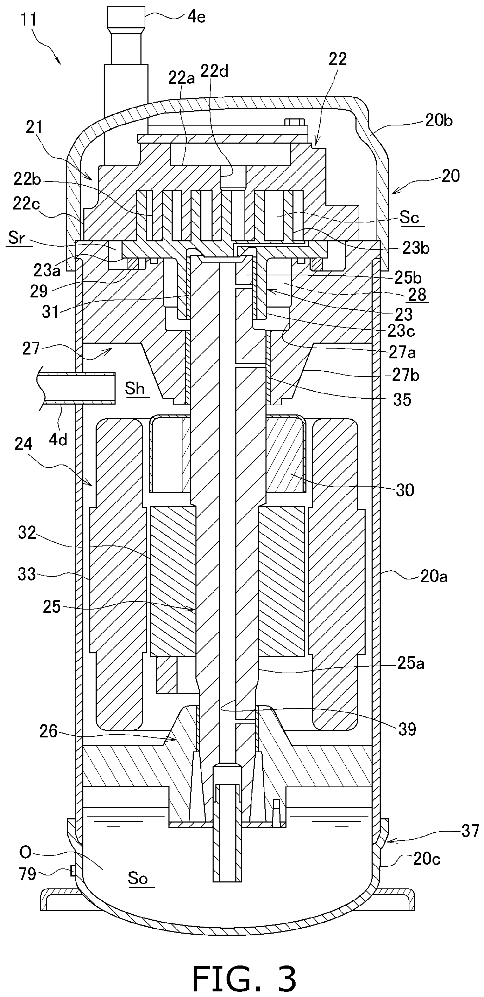

As the compressor 11, for example, a scroll compressor, such as that illustrated in Fig. 3, is usable.

This compressor 11 includes a casing 20, a scroll compression mechanism 21, a drive motor 24, a crankshaft 25, a lower bearing 26, and a balance weight 30.

The casing 20 includes a substantially cylindrical cylinder member 20a that opens at the upper and lower ends thereof, and an upper cover 20b and a lower cover 20c that are provided at the upper end and the lower end of the cylinder member 20a, respectively. The cylinder member 20a is fixed to the upper cover 20b and the lower cover 20c by welding such that airtightness is kept. The casing 20 accommodates constituent devices of the compressor 11, including the scroll compression mechanism 21, the drive motor 24, the crankshaft 25, and the lower bearing 26. The oil reservoir 37 is formed between the lower end and a predetermined height inside the casing 20. The oil reservoir 37 has an oil reservoir space So for storing a refrigerating machine oil O for lubricating the scroll compression mechanism 21 and the like. The oil reservoir 37 is provided with the oil-temperature detection sensor 79 for detecting the temperature of the stored refrigerating machine oil. In the present embodiment, the oil-temperature detection sensor 79 is attached to the outer surface of the lower cover 20c to detect the temperature of the refrigerating machine oil stored in the oil reservoir 37. The suction pipe 4e through which the low-pressure gas refrigerant in the refrigeration cycle of the refrigerant circuit 10 is sucked and through which the gas refrigerant is supplied to the scroll compression mechanism 21 is provided at an upper portion of the casing 20 to extend through the upper cover 20b. The lower end of the suction pipe 4e is connected to a fixed scroll 22 of the scroll compression mechanism 21. The suction pipe 4e is in communication with a compression chamber Sc, which is described later, of the scroll compression mechanism 21. The discharge pipe 4d through which the refrigerant to be discharged to the outside of the casing 20 passes is provided at an intermediate portion of the cylinder member 20a of the casing 20. The discharge pipe 4d is disposed such that an end portion of the discharge pipe 4d inside the casing 20 projects in a high-pressure space Sh formed below a housing 27 of the scroll compression mechanism 21. The high-pressure refrigerant, which has been compressed by the scroll compression mechanism 21, in the refrigeration cycle flows through the discharge pipe 4d.

The scroll compression mechanism 21 includes, mainly, the housing 27, the fixed scroll 22 disposed above the housing 27, and a movable scroll 23 that forms the compression chamber Sc by being combined with the fixed scroll 22.

The fixed scroll 22 includes a flat fixed-side end plate 22a, a spiral fixed-side wrap 22b projecting from the front surface of the fixed-side end plate 22a, and an outer edge portion 22c that surrounds the fixed-side wrap 22b. In a central portion of the fixed-side end plate 22a, a non-circular discharge port 22d in communication with the compression chamber Sc of the scroll compression mechanism 21 is formed to extend through the fixed-side end plate 22a in the thickness direction. The refrigerant compressed in the compression chamber Sc is discharged through the discharge port 22d, passes through a refrigerant passage, which is not illustrated, formed in the fixed scroll 22 and the housing 27, and flows into the high-pressure space Sh. This compressor 11 is a high-pressure dome-type compressor in which the high-pressure refrigerant is present in a region on the outer side of the scroll compression mechanism 21 in the casing 20.

The movable scroll 23 includes a flat movable-side end plate 23a, a spiral movable-side wrap 23b projecting from the front surface of the movable-side end plate 23a, and a cylindrical boss 23c projecting from the back surface of the movable-side end plate 23a. The fixed-side wrap 22b of the fixed scroll 22 and the movable-side wrap 23b of the movable scroll 23 are combined with each other in a state in which the lower surface of the fixed-side end plate 22a and the upper surface of the movable-side end plate 23a face each other. The compression chamber Sc is formed between the fixed-side wrap 22b and the movable-side wrap 23b that are adjacent to each other. In response to the movable scroll 23 revolving with respect to the fixed scroll 22 as described later, the volume of the compression chamber Sc periodically changes, and suction, compression, and discharge of the refrigerant are performed in the scroll compression mechanism 21. The boss 23c is a cylindrical portion whose upper end is closed. An eccentric portion 25b, which is described later, of the crankshaft 25 is inserted into a hollow portion of the boss 23c, and the movable scroll 23 and the crankshaft 25 are thereby coupled to each other. The boss 23c is disposed in an eccentric-portion space 28 formed between the movable scroll 23 and the housing 27. The eccentric-portion space 28 is in communication with the high-pressure space Sh through an oil supply path 39, which is described later, of the crankshaft 25 and the like, and the eccentric-portion space 28 is subjected to a high pressure. The lower surface of the movable-side end plate 23a inside the eccentric-portion space 28 is pressed upward by this pressure toward the fixed scroll 22. This force causes the movable scroll 23 to be in close contact with the fixed scroll 22. The movable scroll 23 is supported by the housing 27 via an Oldham ring 29 disposed in an "Oldham ring space Sr". The Oldham ring 29 is a member that prevents the movable scroll 23 from rotating on its axis and causes the movable scroll 23 to revolve. With the use of the Oldham ring 29, when the crankshaft 25 rotates, the movable scroll 23 coupled at the boss 23c to the crankshaft 25 revolves with respect to the fixed scroll 22 without rotating on its axis, and the refrigerant inside the compression chamber Sc is compressed.

The housing 27 is press-fitted to the inner side of the cylinder member 20a and fixed at the entirety of the outer circumferential surface thereof in the circumferential direction to the cylinder member 20a. The housing 27 and the fixed scroll 22 are fixed to each other by a bolt or the like, which is not illustrated, such that the upper end surface of the housing 27 is in close contact with the lower surface of the outer edge portion 22c of the fixed scroll 22. The housing 27 has a concave portion 27a disposed to be recessed at a central portion of the upper surface, and an upper bearing portion 27b disposed below the concave portion 27a. The concave portion 27a surrounds the side surface of the eccentric-portion space 28 in which the boss 23c of the movable scroll 23 is disposed. An upper bearing 35 that is a cylindrical metal member pivotally supporting a main shaft 25a of the crankshaft 25 is disposed at the upper bearing portion 27b. The upper bearing 35 rotatably supports the main shaft 25a inserted into the upper bearing 35. The Oldham ring space Sr in which the Oldham ring 29 is disposed is formed in the housing 27.

The drive motor 24 includes an annular stator 33 fixed to the inner wall surface of the cylinder member 20a, and, on the inner side of the stator 33, a rotor 32 that is rotatably accommodated with a slight gap (air gap passage) provided between the rotor 32 and the stator 33. The stator 33 is configured to include a coil. The rotor 32 is coupled to the movable scroll 23 via the crankshaft 25 disposed to extend along the axis of the cylinder member 20a in the up-down direction. The rotor 32 rotates and thereby causes the movable scroll 23 to revolve with respect to the fixed scroll 22.

The crankshaft 25 transmits the driving force of the drive motor 24 to the movable scroll 23. The crankshaft 25 is disposed along the axis of the cylinder member 20a to extend in the up-down direction and couples the rotor 32 of the drive motor 24 and the movable scroll 23 of the scroll compression mechanism 21 to each other. The crankshaft 25 includes the main shaft 25a whose center axis is coincident with the axis of the cylinder member 20a, and the eccentric portion 25b that is displaced with respect to the axis of the cylinder member 20a. As described above, the eccentric portion 25b is inserted into the boss 23c of the movable scroll 23. A pin bearing 31 that is a cylindrical metal member pivotally supporting the eccentric portion 25b is provided on the outer side of the eccentric portion 25b in the radial direction. The main shaft 25a is rotatably supported by the pin bearing 31, the upper bearing 35 of the upper bearing portion 27b of the housing 27, and the lower bearing 26, which is described later. The main shaft 25a is coupled between the upper bearing 35 and the lower bearing 26 to the rotor 32 of the drive motor 24. The oil supply path 39 for supplying the refrigerating machine oil O to the scroll compression mechanism 21 and the like is formed inside the crankshaft 25. The lower end of the main shaft 25a is located inside the oil reservoir space So of the oil reservoir 37 formed in a lower portion of the casing 20, and the refrigerating machine oil O in the oil reservoir space So is supplied to the scroll compression mechanism 21 and the like through the oil supply path 39.

The balance weight 30 is an annular member separated from the crankshaft 25 and is fitted to the main shaft 25a. The balance weight 30 includes a cylindrical portion 30a and an eccentric portion 30b formed at a portion of the cylindrical portion 30a in the circumferential direction. The center of gravity of the cylindrical portion 30a is present on the axis of the crankshaft 25, and the cylindrical portion 30a has a circular shape as viewed in the axial direction. The center of gravity of the eccentric portion 30b is displaced from the axis of the crankshaft 25, specifically, is displaced from the axis of the crankshaft 25 in a predetermined direction. Consequently, the center of gravity of the entirety of the balance weight 30 is also displaced from the axis of the crankshaft 25 in a predetermined direction. As described above, the movable scroll 23 is slidably supported at a portion thereof in the vicinity of the center by the eccentric portion 25b of the crankshaft 25. Consequently, the movable scroll 23 is also displaced in the same direction as the eccentric portion 25b. With the above structure, it is possible to ensure balance with the movable scroll 23 by disposing the balance weight 30 at the main shaft 25a with the predetermined direction directed opposite to the displaced direction of the eccentric portion 25b. It is thus possible to prevent deviation of the crankshaft 25.

The lower bearing 26 is disposed below the drive motor 24. The lower bearing 26 is fixed on the inner side and below the cylinder member 20a. The lower bearing 26 is a cylindrical metal member that constitutes a bearing on the lower end side of the crankshaft 25 and that supports the main shaft 25a of the crankshaft 25 rotatably.

Next, an operation of the compressor 11 will be described.

When the drive motor 24 is started, the rotor 32 rotates with respect to the stator 33, and the crankshaft 25 fixed to the rotor 32 rotates. When the crankshaft 25 rotates, the movable scroll 23 coupled to the crankshaft 25 revolves with respect to the fixed scroll 22. Then, the low-pressure gas refrigerant in the refrigeration cycle is sucked into the compression chamber Sc from the peripheral side of the compression chamber Sc through the suction pipe 4e. In response to the movable scroll 23 revolving, the suction pipe 4e and the compression chamber Sc become not in communication with each other. Then, in response to a decrease in the capacity of the compression chamber Sc, the pressure in the compression chamber Sc starts to increase.

The refrigerant inside the compression chamber Sc is compressed in response to the capacity of the compression chamber Sc decreasing and eventually becomes the high-pressure gas refrigerant. The high-pressure gas refrigerant is discharged through the discharge port 22d located near the center of the fixed-side end plate 22a. Thereafter, the high-pressure gas refrigerant passes through a refrigerant passage, which is not illustrated, formed in the fixed scroll 22 and the housing 27 and flows into the high-pressure space Sh. The high-pressure gas refrigerant in the refrigeration cycle that has flewed into the high-pressure space Sh and been compressed by the scroll compression mechanism 21 is discharged from the discharge pipe 4d.

(3) Structure of Expansion Valve 9

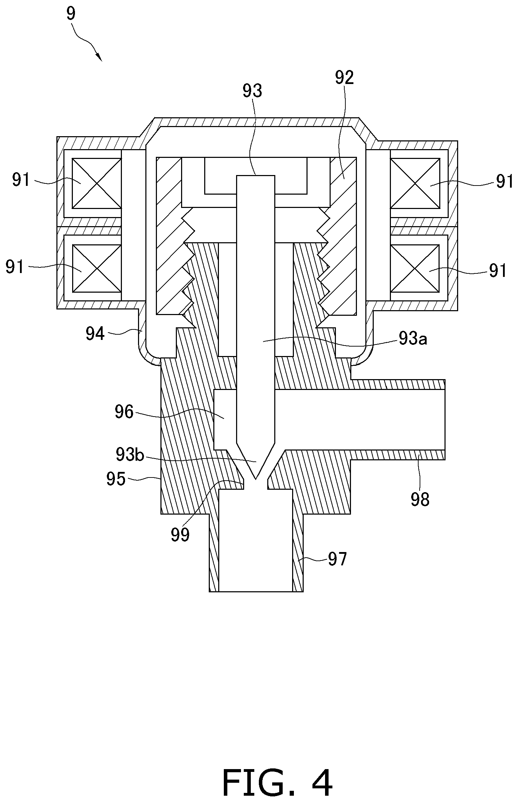

As the expansion valve 9, for example, an electronic expansion valve, such as that illustrated in Fig. 4, using a valve body 93 including a needle 93b is usable.

This expansion valve 9 includes, mainly, a coil 91, a rotor 92, the valve body 93, a casing 94, a valve seat member 95, and the like.

The coil 91 is provided in the circumferential direction with the longitudinal direction of the valve body 93 being considered as the axial direction.

The rotor 92 is driven to rotate by the coil 91. The rotor 92 moves in a screw axis direction by rotating.

The valve body 93 is constituted by a shaft 93a and the needle 93b. The shaft 93a has a cylindrical shape and extends vertically. One end of the shaft 93a is attached to the rotor 92 to be coaxial with the rotor 92. The shaft 93a moves together with the rotor 92 in the axial direction. The needle 93b is provided at the lower end of the shaft 93a to have a conical shape directed downward. The needle 93b projects into a valve-body-side space 96, which is described later.

The coil 91, the rotor 92, the shaft 93a of the valve body 93, and the like are accommodated in the inside of the casing 94.

The valve seat member 95 is provided below the casing 94. The valve seat member 95 includes a first coupling portion 97, a second coupling portion 98, the valve-body-side space 96 for causing the first coupling portion 97 and the second coupling portion 98 to be in communication with each other, and a valve seat 99 provided between the valve-body-side space 96 and the first coupling portion 97. The valve seat 99 has a funnel shape to face the needle 93b of the valve body 93 from below on the outer side in the radial direction.

Thus, the high-pressure liquid refrigerant that has flowed in from the first coupling portion 97 or the second coupling portion 98 is decompressed by passing through a gap between the needle 93b and the valve seat 99. The degree of decompression at this time is adjusted by changing the size of the gap between the needle 93b and the valve seat 99 by moving the valve body 93 forward or rearward by the rotation of the rotor 92.

The valve body 93 having the aforementioned needle 93b can be made of, for example, SUS or brass. The valve body 93 made of SUS is, for example, a valve body constituted by stainless steel that is steel in which, as with SUS304 and the like, a chromium content is 10.5 mass% or more and a carbon content is 1.2 mass% or less. The valve body 93 made of brass is, for example, a valve body constituted by a copper alloy containing 20 mass% or more of zinc. Even when the valve body 93 including the needle 93b is made of such a material, decomposition of the refrigerant is suppressed and corrosion of the valve body 93 due to a decomposition product is suppressed in the air conditioning apparatus 1 in the present embodiment since the pressure of air inside the refrigerant circuit 10 is 667 Pa or less, the refrigerating machine oil contains 3.0 wt% or more and 5.0 wt% or less of the acid scavenger, and the temperature of the refrigerating machine oil in the oil reservoir 37 is maintained at 120°C or lower.

(4) Features of Embodiment

The 1,2-difluoroethylene and other hydrofluoroolefin used as refrigerants are unstable and easily decompose. In contrast, instead of using a single refrigerant of 1,2-difluoroethylene or other hydrofluoroolefin, the present embodiment uses one of a mixed refrigerant containing 1,2-difluoroethylene and one or more types of hydrofluorocarbon, or a mixed refrigerant containing 1,2-difluoroethylene and one or more types of hydrofluoroolefin. Consequently, a disproportionation reaction of 1,2-difluoroethylene and other hydrofluoroolefin can be suppressed.

In addition, it has been found that 1,2-difluoroethylene and other hydrofluoroolefin each decompose easily in a high-temperature environment and each decompose easily, in particular, in a location where 1,2-difluoroethylene or other hydrofluoroolefin is present together with a refrigerating machine oil having a high temperature in the refrigerant circuit. Such decomposition of the refrigerant due to heat may generate a refrigerant deterioration product that generates an acid such as a hydrofluoric acid and may cause corrosion of the components of the refrigerant circuit.

Meanwhile, in the air conditioning apparatus 1 in the present embodiment, not only the refrigerating machine oil containing 3.0 wt% or more and 5.0 wt% or less of the acid scavenger with the pressure of air inside the refrigerant circuit 10 being 667 Pa or less, but also the temperature of the refrigerating machine oil in the oil reservoir 37 is maintained at 120 °C or lower. Consequently, decomposition of the refrigerant present together with the refrigerating machine oil is sufficiently suppressed, generation of an acid such as hydrofluoric acid from a decomposition product is also suppressed, and corrosion of the components of the refrigerant circuit 10 is suppressed. In particular, it is possible in the present embodiment to increase the temperature of the refrigerating machine oil in the oil reservoir 37 to 120°C and thus possible to widen an operable condition range.

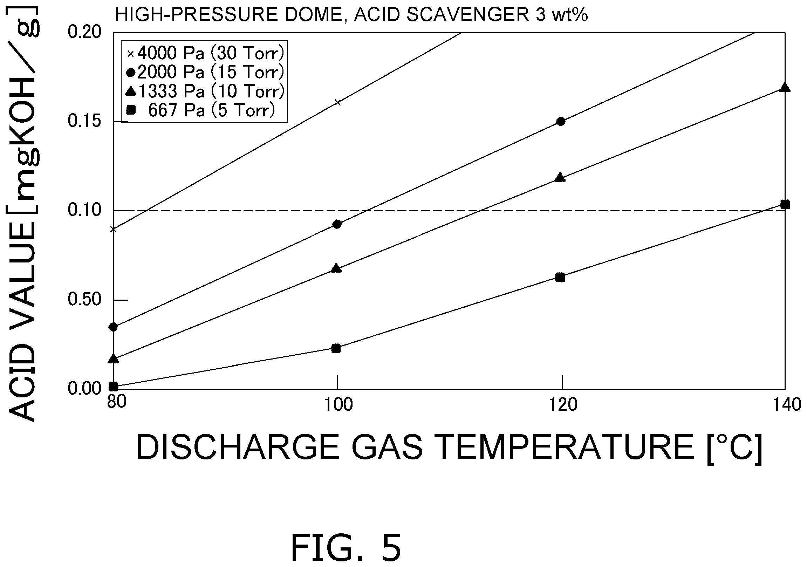

Fig. 5 shows a relationship between temperatures of a discharge gas discharged from the compressor 11 and acid values when 3.0 wt% of the acid scavenger was blended in the refrigerating machine oil and the air pressure was varied in the refrigerant circuit 10 included in the air conditioning apparatus 1 in the present embodiment. Here, a mixed refrigerant (weight ratio is 40 parts by mass:60 parts by mass) of 1,2-difluoroethylene and HFO-1234yf was used as the refrigerant, a refrigerating machine oil (PVE) in which 3.0 wt% of an epoxy-based acid scavenger is blended as the acid scavenger was used, and the acid value of the refrigerating machine oil after 2000 hours of a rated operation was measured in accordance with the regulation in JIS K 2211. The value of the acid value is the number of milligrams (mg) of potassium hydroxide (KOH) required to neutralize an acidic component contained in 1 g of a sample.

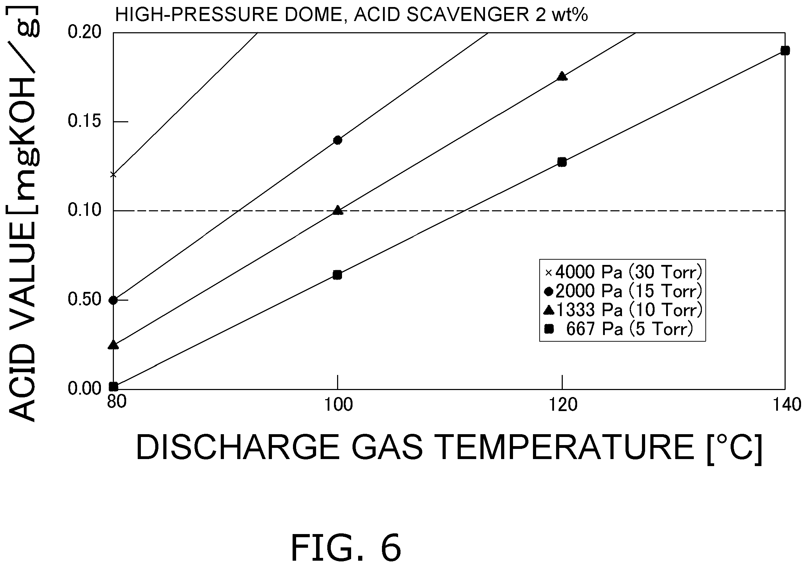

Fig. 6 shows a relationship between temperatures of a discharge gas discharged from the compressor 11 and acid values when 2.0 wt% of the acid scavenger was blended in the refrigerating machine oil and the air pressure was varied while the other conditions were the same as those in the measurement shown in Fig. 5. Here, a refrigerating machine oil (PVE) in which 2.0 wt% of an epoxy-based acid scavenger is blended as the acid scavenger was used.

Fig. 5 and Fig. 6 show that the lower the pressure of air included in the refrigerant circuit 10, the more the acid value is suppressed to be small. It is found that, since the pressure of air in the refrigerant circuit 10 is 667 Pa or less and the temperature of the gas discharged from the compressor 11 is maintained at 120°C or lower in the air conditioning apparatus 1 in the present embodiment, the acid value can be suppressed to be 0.10 (mgKOH/g), which is a reference, or less and corrosion of the components of the refrigerant circuit 10 is suppressed. Here, since the refrigerating machine oil stored in the oil reservoir 37 is located closer than the compression mechanism 21 of the compressor 11 to the high-pressure side and is subjected to a high pressure, the temperature of the gas discharged from the compressor 11 corresponds to a temperature detected by the oil-temperature detection sensor 79.

(5) Other Embodiments

(5-1) Another Embodiment A

In the aforementioned embodiment, the air conditioning apparatus 1 in which the pressure of air inside the refrigerant circuit 10 is 667 Pa or less, the refrigerating machine oil contains 3.0 wt% or more and 5.0 wt% or less of the acid scavenger, and the temperature of the refrigerating machine oil in the oil reservoir 37 is maintained at 120°C or lower has been described as an example.

However, the air conditioning apparatus 1 is not limited thereto and may be, for example, an air conditioning apparatus in which the pressure of air inside the refrigerant circuit 10 is 1333 Pa or less, the refrigerating machine oil contains no acid scavenger or contains less than 3.0 wt% of the acid scavenger, and the temperature of the refrigerating machine oil in the oil reservoir 37 is maintained at 100°C or lower or at 900°C or lower. In this case, the refrigerating machine oil may contain 1.0 wt% or more and 2.5 wt% or less of the acid scavenger or 2.0 wt% of the acid scavenger.

Also in this case, as grasped on the basis of the test results in Fig. 5 and Fig. 6, decomposition of the refrigerant present together with the refrigerating machine oil is sufficiently suppressed, and corrosion of the components of the refrigerant circuit 10 due to a decomposition product is suppressed. Specifically, according to comparison between Fig. 5 and Fig. 6, it is found that, when the blending amount of the acid scavenger in the refrigerating machine oil is lower by about 1.0 wt%, maintaining the upper limit temperature of the refrigerating machine oil in the oil reservoir 37 to be lower than or equal to a temperature lower by about 20 degrees C, more preferably, a temperature lower by about 30 degrees C suppresses decomposition of the refrigerant and suppresses corrosion of the components of the refrigerant circuit 10 due to a decomposition product. In addition, Fig. 5 and Fig. 6 show that, even when the pressure of air inside the refrigerant circuit 10 increases by about 667 Pa, maintaining the upper limit temperature of the refrigerating machine oil in the oil reservoir 37 to be lower than or equal to a temperature lower by about 20°C suppresses decomposition of the refrigerant and suppresses corrosion of the components of the refrigerant circuit 10 due to a decomposition product.

(5-2) Another Embodiment B

The air conditioning apparatus 1 may be, for example, an air conditioning apparatus in which the pressure of air inside the refrigerant circuit 10 is 2000 Pa or less, the refrigerating machine oil contains 3.0 wt% or more and 5.0 wt% or less of the acid scavenger, and the temperature of the refrigerating machine oil in the oil reservoir 37 is maintained at 100°C or lower.

Also in this case, as grasped from the test results in Fig. 5, decomposition of the refrigerant present together with the refrigerating machine oil is sufficiently suppressed, and corrosion of the components of the refrigerant circuit 10 due to a decomposition product is suppressed.

(5-3) Another Embodiment C

The air conditioning apparatus 1 may be, for example, an air conditioning apparatus in which the pressure of air inside the refrigerant circuit 10 is 2000Pa or less, the refrigerating machine oil contains no acid scavenger or contains less than 3.0 wt% of the acid scavenger, and the temperature of the refrigerating machine oil in the oil reservoir 37 is maintained at 80 °C or lower. In this case, the refrigerating machine oil may contain 1.0 wt% or more and 2.5 wt% or less of the acid scavenger.

Also in this case, as grasped on the basis of the test results in Fig. 5 and Fig. 6, decomposition of the refrigerant present together with the refrigerating machine oil is sufficiently suppressed, and corrosion of the components of the refrigerant circuit 10 due to a decomposition product is suppressed. Specifically, according to comparison between Fig. 5 and Fig. 6, it is found that, when the blending amount of the acid scavenger in the refrigerating machine oil is lower by about 1.0 wt%, maintaining the upper limit temperature of the refrigerating machine oil in the oil reservoir 37 to be lower than or equal to a temperature lower by about 20 degrees C, more preferably, a temperature lower by about 30 degrees C suppresses decomposition of the refrigerant and suppresses corrosion of the components of the refrigerant circuit 10 due to a decomposition product. In addition, Fig. 5 and Fig. 6 show that, even when the pressure of air inside the refrigerant circuit 10 increases by about 667 Pa, maintaining the upper limit temperature of the refrigerating machine oil in the oil reservoir 37 to be lower than or equal to a temperature lower by about 20°C suppresses decomposition of the refrigerant and suppresses corrosion of the components of the refrigerant circuit 10 due to a decomposition product. From the above, it is found that, when the pressure of air inside the refrigerant circuit 10 is 2000a or less, the air conditioning apparatus may be configured such that the temperature of the refrigerating machine oil in the oil reservoir 37 is maintained at 80°C or lower.

(5-4) Another Embodiment D

The air conditioning apparatus 1 may be, for example, an air conditioning apparatus in which the pressure of air inside the refrigerant circuit 10 is 4000 Pa or less, the refrigerating machine oil contains 3.0 wt% or more and 5.0 wt% or less of the acid scavenger, and the temperature of the refrigerating machine oil in the oil reservoir 37 is maintained at 80 °C or lower.

Also in this case, as grasped on the basis of the test results in Fig. 5, decomposition of the refrigerant present together with the refrigerating machine oil is sufficiently suppressed, and corrosion of the components of the refrigerant circuit 10 due to a decomposition product is suppressed.

(5-5) Another Embodiment E

In each of the aforementioned embodiment and the other embodiments, an example in which the temperature of the refrigerating machine oil stored in the oil reservoir 37 is controlled to be a predetermined upper limit value or less has been described.

However, for example, the predetermined upper limit temperature of the refrigerating machine oil stored in the oil reservoir 37 may be determined on the basis of the pressure of air inside the refrigerant circuit 10. Specifically, a temperature of the refrigerating machine oil grasped by substituting a value of the pressure of air inside the refrigerant circuit 10 into the following equation may be used as the upper limit temperature. The following equation is obtained on the basis of an experimental result showing a state of decomposition of the refrigerant in response to the temperature of the refrigerating machine oil and the pressure of air inside the refrigerant circuit 10.

$$0.1 = ((8 \times 10^{-5} \times 133.322 \times \text{pressure of air (Pa)}) + 0.0017) \times (\text{temperature of refrigerating machine oil (°C)}) + (-0.0032 \times 133.322 \times \text{pressure of air (Pa)} - 0.15)$$

(5-6) Another Embodiment F

The air conditioning apparatus 1 may be, for example, an air conditioning apparatus in which the pressure of air inside the refrigerant circuit 10 is 667 Pa or less, the refrigerating machine oil contains 2.0 wt% or more of the acid scavenger, and the temperature of the refrigerating machine oil in the oil reservoir 37 is maintained at 120°C or lower.

(5-7) Another Embodiment G

The air conditioning apparatus 1 may be, for example, an air conditioning apparatus in which the pressure of air inside the refrigerant circuit 10 is 667 Pa or less, the refrigerating machine oil contains 0.3 wt% or more of the acid scavenger, and the temperature of the refrigerating machine oil in the oil reservoir 37 is maintained at 100°C or lower.

(5-8) Another embodiment H

The air conditioning apparatus 1 may be, for example, an air conditioning apparatus in which the pressure of air inside the refrigerant circuit 10 is 1333 Pa or less, the refrigerating machine oil contains 0.3 wt% or more of the acid scavenger, and the temperature of the refrigerating machine oil in the oil reservoir 37 is maintained at 80°C or lower.

(5-9) Another Embodiment I

In the aforementioned embodiment, an example in which the components, such as the compressor 11, of the refrigerant circuit 10 are controlled on the basis of a temperature of the refrigerating machine oil detected by the oil-temperature detection sensor 79 has been described.

However, for example, a correlation between the number of rotations of the compressor 11 and the temperature of the refrigerating machine oil in the oil reservoir 37 is stored as data in a memory, and the number of the rotations may be controlled on the basis of the data such that the temperature of the refrigerating machine oil in the oil reservoir 37 is maintained at a predetermined value or lower.

Alternatively, for example, a correlation between a discharge temperature, which is the temperature of the refrigerant discharged from the compressor 11, and the temperature of the refrigerating machine oil in the oil reservoir 37 is stored as data in a memory, and the discharge temperature may be controlled on the basis of the data such that the temperature of the refrigerating machine oil in the oil reservoir 37 is maintained at a predetermined value or lower.

Further, for example, a correlation between a discharge pressure, which is the pressure of the refrigerant discharged from the compressor 11, and the temperature of the refrigerating machine oil in the oil reservoir 37 is stored as data in a memory, and the discharge pressure may be controlled on the basis of the data such that the temperature of the refrigerating machine oil in the oil reservoir 37 is maintained at a predetermined value or lower.

(5-10) Another Embodiment J

In the aforementioned embodiment, an example in which the air conditioning apparatus 1 including the refrigerant circuit 10 in which the compressor 11 of a high-pressure dome type is used has been described.

However, for example, the air conditioning apparatus 1 may include the refrigerant circuit 10 in which a compressor 11a of a low-pressure dome type is used. The refrigerant and the refrigerating machine oil to be used are the same as those in the aforementioned embodiment.

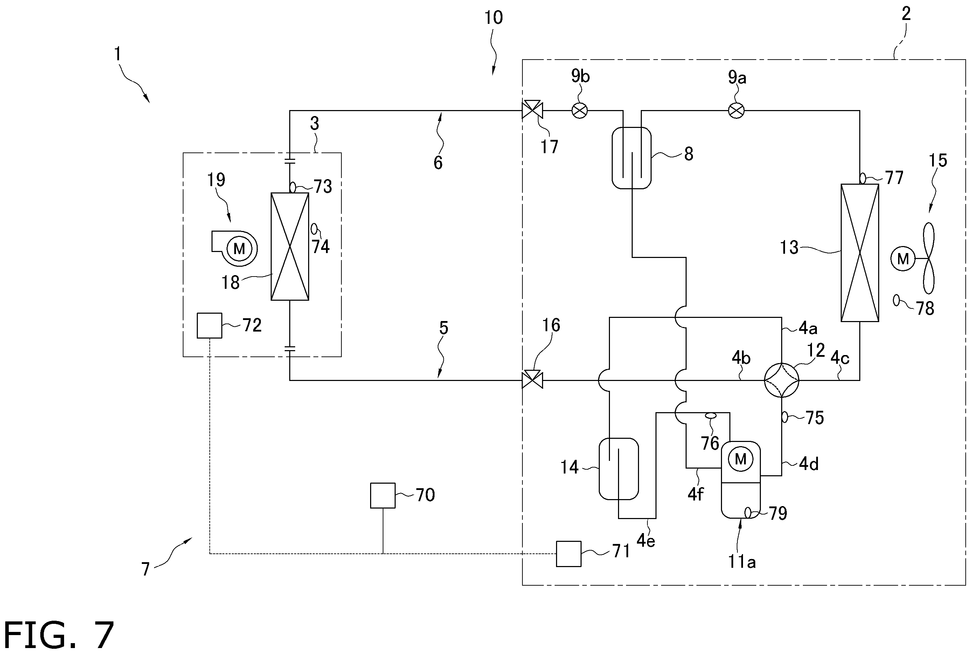

The air conditioning apparatus 1 according to the other embodiment J includes the refrigerant circuit 10 illustrated in Fig. 7. Note that the same portions as those in the aforementioned embodiment are denoted by the same reference signs, and description thereof is omitted.

The refrigerant circuit 10 includes a first expansion valve 9a and a second expansion valve 9b, instead of the expansion valve 9 in the aforementioned embodiment, and is provided with an injection pipe 4f. The first expansion valve 9a is provided between the high-pressure receiver 8 and the outdoor heat exchanger 13. The second expansion valve 9b is provided between the high-pressure receiver 8 and the liquid-side shutoff valve 17. The injection pipe 4f connects the high-pressure receiver 8 and the compressor 11a to each other. Hereinafter, the compressor 11a will be described in detail.

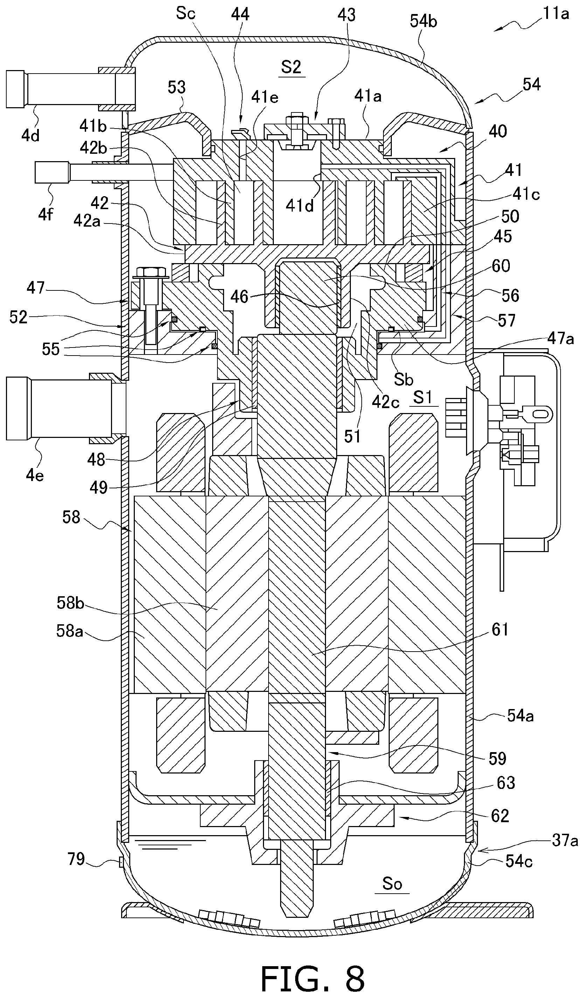

The compressor 11a is a so-called low-pressure dome-type scroll compressor. As illustrated in Fig. 8, the compressor 11a includes, mainly, a casing 54, a compression mechanism 40, a floating member 47, a housing 52, a seal member 55, a motor 58, a crankshaft 59, and a lower bearing housing 62.

The casing 54 includes a substantially cylindrical cylinder member 54a, an upper cover 54b attached to the upper end of the cylinder member 54a, and a lower cover 54c attached to the lower end of the cylinder member 54a. The cylinder member 54a is fixed to the upper cover 54b and the lower cover 54c by welding such that airtightness is kept. The casing 54 accommodates components of the compressor 11a, including the compression mechanism 40, the floating member 47, the housing 52, the seal member 55, the motor 58, the crankshaft 59, and the lower bearing housing 62.

The compression mechanism 40 is installed in an upper portion of the casing 54. The floating member 47 and the housing 52 are installed below the compression mechanism 40. The motor 58 is installed below the housing 52. The lower bearing housing 62 is installed below the motor 58.

An oil reservoir 37a is formed in a bottom portion of the casing 54. The oil reservoir 37a has the oil reservoir space So that stores the refrigerating machine oil for lubricating the compression mechanism 40 and the like. The oil reservoir 37a is a portion of the casing 54 and corresponds to a portion below the lower bearing housing 62. For example, as illustrated in Fig. 8, the oil reservoir 37a is constituted by the lower cover 54c and a lower end portion of the cylinder member 54a. An oil-temperature detection sensor 79 is attached to the outer surface of the oil reservoir 37a. The oil-temperature detection sensor 79 measures the temperature of the refrigerating machine oil stored in the oil reservoir 37a.

The internal space of the casing 54 is partitioned into a first space S1 and a second space S2 by a first flow path 56. The first space S1 is a space on the lower side with respect to the first flow path 56. The second space S2 is a space on the upper side with respect to the first flow path 56. The first flow path 56 is fixed to the compression mechanism 40 and the casing 54 by welding such that airtightness is kept between the first space S1 and the second space S2. The first flow path 56 is a plate-shaped member having an annular shape in plan view. The inner circumferential side of the first flow path 56 is fixed at the entire circumference to an upper portion of a fixed scroll 41 of the compression mechanism 40. The outer circumferential side of the first flow path 56 is fixed at the entire circumference to the inner surface of the casing 54.

The first space S1 is a space in which the motor 58 is installed. The first space S1 is a space into which the refrigerant before being compressed by the compressor 11a flows from the refrigerant circuit 10 including the compressor 11a. The first space S1 is a space into which the low-pressure refrigerant in the refrigeration cycle flows.

The second space S2 is a space into which the refrigerant discharged from the compression mechanism 40 (the refrigerant compressed by the compression mechanism 40) flows. The second space S2 is a space into which the high-pressure refrigerant in the refrigeration cycle flows.

The suction pipe 4e, the discharge pipe 4d, and the injection pipe 4f are attached to the casing 54 such that the inside and the outside of the casing 54 are in communication with each other.

The suction pipe 4e is attached to a portion near the center of the casing 54 in the up-down direction (vertical direction). Specifically, as illustrated in Fig. 8, the suction pipe 4e is horizontally attached at a height position between the housing 52 and the motor 58 to the cylinder member 54a. The suction pipe 4e causes the outside of the casing 54 and the first space S1 inside the casing 54 to be in communication with each other. The refrigerant (the low-pressure refrigerant in the refrigeration cycle) before being compressed flows into the first space S1 through the suction pipe 4e.

The discharge pipe 4d is attached at a height position above the first flow path 56 to an upper portion of the casing 54. Specifically, as illustrated in Fig. 8, the suction pipe 4e is attached horizontally to the upper cover 54b. The discharge pipe 4d causes the outside of the casing 54 and the second space S2 inside the casing 54 to be in communication with each other. The refrigerant (the high-pressure refrigerant in the refrigeration cycle) that has been compressed by the compression mechanism 40 and has flowed into the second space S2 flows out to the outside of the compressor 11a through the discharge pipe 4d.

The injection pipe 4f is attached at a height position below the first flow path 56 to an upper portion of the casing 54. Specifically, as illustrated in Fig. 8, the injection pipe 4f is attached horizontally at the height position of the compression mechanism 40 to the cylinder member 54a. As illustrated in Fig. 8, an end portion of the injection pipe 4f on the inner side of the casing 54 is connected to the fixed scroll 41 of the compression mechanism 40. The injection pipe 4f is in communication with the compression chamber Sc in the middle of compression inside the compression mechanism 40 through a passage (not illustrated) formed in the fixed scroll 41. The intermediate-pressure refrigerant (the refrigerant with a pressure between a low pressure and a high pressure in the refrigeration cycle) is supplied from the refrigerant circuit 10 including the compressor 11a to the compression chamber Sc in the middle of compression through the injection pipe 4f.

The compression mechanism 40 includes, mainly, the fixed scroll 41 and a movable scroll 42. The fixed scroll 41 and the movable scroll 42 are combined with each other and form the compression chamber Sc. The compression mechanism 40 compresses the refrigerant in the compression chamber Sc and discharges the compressed refrigerant.

As illustrated in Fig. 8, the fixed scroll 41 is placed on the housing 52. The fixed scroll 41 and the housing 52 are fixed to each other with a fixing means, such as a bolt.

The fixed scroll 41 includes a disk-shaped fixed-side end plate 41a, a spiral-shaped fixed-side wrap 41b, and a peripheral portion 41c. The fixed-side wrap 41b and the peripheral portion 41c extend from the front surface (lower surface) of the fixed-side end plate 41a toward the movable scroll 42 (downward). In a bottom view of the fixed scroll 41, the fixed-side wrap 41b is formed in a spiral shape (involute shape) extending from a portion near the center of the fixed-side end plate 41a toward the outer circumferential side. The peripheral portion 41c has a cylindrical shape. The peripheral portion 41c is located on the outer circumferential side of the fixed-side end plate 41a so as to surround the fixed-side wrap 41b.

During the operation of the compressor 11a, the movable scroll 42 turns with respect to the fixed scroll 41, thereby causing the refrigerant (the low-pressure refrigerant in the refrigeration cycle) that has flowed from the first space S1 into the compression chamber Sc on the peripheral side to be compressed as the refrigerant moves toward the compression chamber Sc on the innermost side (center side). A discharge port 41d through which the refrigerant compressed in the compression chamber Sc is to be discharged is formed near the center of the fixed-side end plate 41a to extend through the fixed-side end plate 41a in the thickness direction (up-down direction) of the fixed-side end plate 41a. The discharge port 41d is in communication with the compression chamber Sc on the innermost side. A discharge valve 43 that opens and closes the discharge port 41d is mounted above the fixed-side end plate 41a. When the pressure in the compression chamber Sc that is on the innermost side and that is in communication with the discharge port 41d increases to be higher than the pressure in the space (second space S2) above the discharge valve 43 by a predetermined value or more, the discharge valve 43 opens to allow the refrigerant to flow into the second spaces S2 through the discharge port 41d.

On the outer circumferential side of the discharge port 41d of the fixed-side end plate 41a, a relief hole 41e is formed to extend through the fixed-side end plate 41a in the thickness direction of the fixed-side end plate 41a. The relief hole 41e is in communication with the compression chamber Sc formed on the outer circumferential side with respect to the compression chamber Sc that is on the innermost side and that is in communication with the discharge port 41d. The relief hole 41e is in communication with the compression chamber Sc in the middle of compression of the compression mechanism 40. A plurality of the relief holes 41e may be formed in the fixed-side end plate 41a. A relief valve 44 that opens and closes the relief hole 41e is mounted above the fixed-side end plate 41a. When the pressure in the compression chamber Sc in communication with the relief hole 41e increases to be higher than the pressure in the space (second space S2) above the relief valve 44 by a predetermined value or more, the relief valve 44, which is a safety valve, opens to allow the refrigerant to flow into the second space S2 through the relief hole 41e.

The movable scroll 42 includes a disk-shaped movable-side end plate 42a, a spiral-shaped movable-side wrap 42b, and a cylindrical boss portion 42c. The movable-side wrap 42b extends from the front surface (upper surface) of the movable-side end plate 42a toward the fixed scroll 41 (upward). The boss portion 42c extends from the back surface (lower surface) of the movable-side end plate 42a toward the motor 58 (downward). In a top view of the movable scroll 42, the movable-side wrap 42b is formed in a spiral shape (involute shape) extending from a portion near the center of the movable-side end plate 42a toward the outer circumferential side.

The fixed-side wrap 41b of the fixed scroll 41 and the movable-side wrap 42b of the movable scroll 42 are combined with each other and form the compression chamber Sc. The fixed scroll 41 and the movable scroll 42 are combined with each other such that the front surface (lower surface) of the fixed-side end plate 41a and the front surface (upper surface) of the movable-side end plate 42a face each other. Consequently, the compression chamber Sc surrounded by the fixed-side end plate 41a, the fixed-side wrap 41b, the movable-side wrap 42b, and the movable-side end plate 42a is formed.

The compression mechanism 40 has a symmetrical wrap structure or an asymmetrical wrap structure. In the compression mechanism 40 having the symmetrical wrap structure, a first compression chamber surrounded by the outer circumferential surface of the movable-side wrap 42b and the inner circumferential surface of the fixed-side wrap 41b, and a second compression chamber surrounded by the inner circumferential surface of the movable-side wrap 42b and the outer circumferential surface of the fixed-side wrap 41b are formed to be point-symmetrical when viewed in the vertical direction. In the compression mechanism 40 having the asymmetrical wrap structure, the first compression chamber and the second compression chamber are not formed to be point-symmetrical when viewed in the vertical direction.

The movable-side end plate 42a is disposed above the floating member 47. During the operation of the compressor 11a, the floating member 47 is pressed toward the movable scroll 42 by the pressure of a back pressure space Sb formed below the floating member 47. Consequently, when a pressing portion 50 at an upper portion of the floating member 47 comes into contact with the back surface (lower surface) of the movable-side end plate 42a, the floating member 47 presses the movable scroll 42 toward the fixed scroll 41. The movable scroll 42 is brought into close contact with the fixed scroll 41 by the force of the floating member 47 pressing the movable scroll 42 toward the fixed scroll 41. Consequently, leakage of the refrigerant through a gap between the tip (distal end surface) of the fixed-side wrap 41b and the bottom surface (the main surface in contact with the tip) of the movable-side end plate 42a and a gap between the tip of the movable-side wrap 42b and the bottom surface of the fixed-side end plate 41a is suppressed.

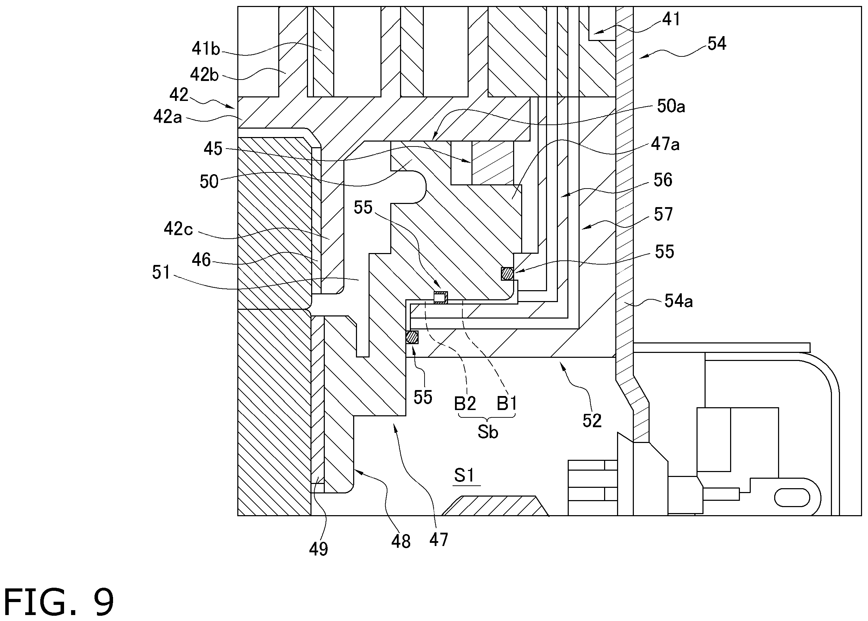

The back pressure space Sb is a space formed between the floating member 47 and the housing 52. As illustrated in Fig. 9, the back pressure space Sb is mainly formed on the back surface side (lower side) of the floating member 47. The refrigerant in the compression chamber Sc of the compression mechanism 40 is guided to the back pressure space Sb. A portion between the back pressure space Sb and the first space S1 around the back pressure space Sb is sealed. During the operation of the compressor 11a, the pressure in the back pressure space Sb is higher than the pressure in the first space S1.

An Oldham coupling 45 is disposed between the movable scroll 42 and the floating member 47. The Oldham coupling 45 is slidably engaged with both the movable scroll 42 and the floating member 47. The Oldham coupling 45 causes the movable scroll 42 to turn with respect to the fixed scroll 41 while suppressing rotation of the movable scroll 42 on its axis.

The boss portion 42c is disposed in an eccentric-portion space 51 surrounded by the inner surface of the floating member 47. A first bearing metal 46 is disposed inside the boss portion 42c. The first bearing metal 46 is, for example, press-fitted to the inside of the boss portion 42c and fixed. An eccentric portion 60 of the crankshaft 59 is inserted into the first bearing metal 46. As a result of the eccentric portion 60 being inserted into the first bearing metal 46, the movable scroll 42 and the crankshaft 59 are coupled to each other.

The floating member 47 is disposed on the back surface side (the side opposite to the side where the fixed scroll 41 is disposed) of the movable scroll 42. The floating member 47 is pressed toward the movable scroll 42 by the pressure of the back pressure space Sb and thereby presses the movable scroll 42 toward the fixed scroll 41. A portion of the floating member 47 also functions as a bearing that supports the crankshaft 59.

The floating member 47 includes, mainly, a cylindrical body portion 47a, the pressing portion 50, and an upper bearing housing 48.

The body portion 47a forms the eccentric-portion space 51 surrounded by the inner surface of the body portion 47a. The boss portion 42c of the movable scroll 42 is disposed in the eccentric-portion space 51.

The pressing portion 50 is a cylindrical member extending from the upper end of the body portion 47a toward the movable scroll 42. As illustrated in Fig. 9, a thrust surface 50a of the upper end of the pressing portion 50 faces the back surface of the movable-side end plate 42a of the movable scroll 42. The thrust surface 50a is formed in an annular shape in plan view. When the floating member 47 is pressed toward the movable scroll 42 by the pressure of the back pressure space Sb, the thrust surface 50a comes into contact with the back surface of the movable-side end plate 42a and presses the movable scroll 42 toward the fixed scroll 41.

The upper bearing housing 48 is a cylindrical member disposed below (below the eccentric-portion space 51) the body portion 47a. A second bearing metal 49 is disposed inside the upper bearing housing 48. The second bearing metal 49 is, for example, press-fitted to the inside of the upper bearing housing 48 and fixed. The second bearing metal 49 rotatably supports a main shaft 61 of the crankshaft 59.

The housing 52 is a substantially cylindrical member disposed below the fixed scroll 41 and the floating member 47. The housing 52 supports the floating member 47. The back pressure space Sb is formed between the housing 52 and the floating member 47. The housing 52 is, for example, attached to the inner surface of the casing 54 by press fitting.

The seal member 55 is a member for forming the back pressure space Sb between the floating member 47 and the housing 52. The seal member 55 is, for example, a gasket, such as an O-ring. As illustrated in Fig. 9, the seal member 55 divides the back pressure space Sb into a first chamber B1 and a second chamber B2. The first chamber B1 and the second chamber B2 are each a space having a substantially annular shape in plan view. The second chamber B2 is disposed on the inner side of the first chamber B1. In plan view, the area of the first chamber B1 is larger than the area of the second chamber B2.

The first chamber B1 is in communication through the first flow path 56 with the compression chamber Sc in the middle of compression. The first flow path 56 is a flow path that guides the refrigerant (the intermediate-pressure refrigerant) in the middle of compression in the compression mechanism 40 to the first chamber B1. The first flow path 56 is formed in the fixed scroll 41 and the housing 52.

The second chamber B2 is in communication through a second flow path 57 with the discharge port 41d of the fixed scroll 41. The second flow path 57 is a flow path that guides the refrigerant (the high-pressure refrigerant) discharged from the compression mechanism 40 to the second chamber B2. The second flow path 57 is formed in the fixed scroll 41 and the housing 52.

During the operation of the compressor 11a, the pressure in the second chamber B2 is higher than the pressure in the first chamber B1. However, the force with which the movable scroll 42 is pressed toward the fixed scroll 41 by the pressure of the back pressure space Sb is not easily increased to be excessive, since the area of the first chamber B1 is larger than the area of the second chamber B2 in plan view. With the second chamber B2 being disposed on the inner side with respect to the first chamber B1, the force with which the movable scroll 42 is pressed downward by the pressure of the compression chamber Sc and the force with which the movable scroll 42 is pressed upward by the floating member 47 are easily balanced.

The motor 58 drives the movable scroll 42. The motor 58 includes a stator 58a and a rotor 58b. The stator 58a is an annular member fixed to the inner surface of the casing 54. The rotor 58b is a cylindrical member disposed on the inner side of the stator 58a. A slight gap (air gap) is formed between the inner circumferential surface of the stator 58a and the outer circumferential surface of the rotor 58b.

The crankshaft 59 extends through the rotor 58b in the axial direction of the rotor 58b. The rotor 58b is coupled to the movable scroll 42 via the crankshaft 59. The motor 58 drives the movable scroll 42 by rotation of the rotor 58b and turns the movable scroll 42 with respect to the fixed scroll 41.

The crankshaft 59 couples the rotor 58b of the motor 58 and the movable scroll 42 of the compression mechanism 40 to each other. The crankshaft 59 extends in the up-down direction. The crankshaft 59 transmits the driving force of the motor 58 to the movable scroll 42.

The crankshaft 59 includes, mainly, the eccentric portion 60 and the main shaft 61.

The eccentric portion 60 is disposed above the main shaft 61. The center axis of the eccentric portion 60 is displaced with respect to the center axis of the main shaft 61. The eccentric portion 60 is coupled to the first bearing metal 46 disposed inside the boss portion 42c of the movable scroll 42.

The main shaft 61 is rotatably supported by the second bearing metal 49 disposed in the upper bearing housing 48 of the floating member 47 and by a third bearing metal 63 disposed in the lower bearing housing 62. The main shaft 61 is coupled, between the upper bearing housing 48 and the lower bearing housing 62, to the rotor 58b of the motor 58. The main shaft 61 extends in the up-down direction.

An oil passage (not illustrated) is formed inside the crankshaft 59. The oil passage has a main path and a branch path. The main path extends from the lower end to the upper end of the crankshaft 59 in the axial direction of the crankshaft 59. The branch path extends from the main path in the radial direction of the crankshaft 59. The refrigerating machine oil in the oil reservoir 37a is pumped up by a pump (not illustrated) provided at the lower end of the crankshaft 59 and is supplied through the oil path to sliding portions between the crankshaft 59 and each of the first bearing metal 46, the second bearing metal 49, and the third bearing metal 63 and sliding portions and the like of the compression mechanism 40.

The lower bearing housing 62 is fixed to the inner surface of the casing 54. The lower bearing housing 62 is disposed below the motor 58. The third bearing metal 63 is disposed inside the lower bearing housing 62. The third bearing metal 63 is, for example, press-fitted to the inside of the lower bearing housing 62 and fixed. The main shaft 61 of the crankshaft 59 passes through the third bearing metal 63. The third bearing metal 63 rotatably supports a lower portion side of the main shaft 61 of the crankshaft 59.

Hereinafter, an operation of the compressor 11a in a normal state will be described. The normal state is a state in which the pressure of the refrigerant discharged through the discharge port 41d of the compression mechanism 40 is higher than the pressure in the compression chamber Sc in the middle of compression.

When the motor 58 is driven, the rotor 58b rotates, and the crankshaft 59 coupled to the rotor 58b also rotates. When the crankshaft 59 rotates, the Oldham coupling 45 causes the movable scroll 42 to turn, without rotating on its axis, with respect to the fixed scroll 41. The low-pressure refrigerant that has flowed into the first space S1 from the suction pipe 4e passes through a refrigerant passage (not illustrated) formed in the housing 52 and is sucked into the compression chamber Sc on the peripheral side of the compression mechanism 40. When the movable scroll 42 turns, the first space S1 and the compression chamber Sc are caused to be not in communication with each other, the capacity of the compression chamber Sc decreases, and the pressure in the compression chamber Sc increases. The intermediate-pressure refrigerant is injected from the injection pipe 4f into the compression chamber Sc in the middle of compression. The pressure of the refrigerant increases as the refrigerant moves from the compression chamber Sc on the peripheral side (outer side) toward the compression chamber Sc on the center side (inner side), and the pressure of the refrigerant becomes a high pressure in the refrigeration cycle eventually. The refrigerant compressed by the compression mechanism 40 is discharged through the discharge port 41d of the fixed-side end plate 41a into the second space S2. The high-pressure refrigerant in the second space S2 is discharged from the discharge pipe 4d.

In the compressor 11a described above, the refrigerating machine oil stored in the oil reservoir 37a is positioned on the low-pressure side with respect to the compression mechanism 40 and is subjected to a low pressure. Therefore, it is easy to suppress an increase in the temperature of the refrigerating machine oil, compared with a case where the refrigerating machine oil is subjected to the high-pressure refrigerant as in the high-pressure dome-type compressor 11 in the aforementioned embodiment.

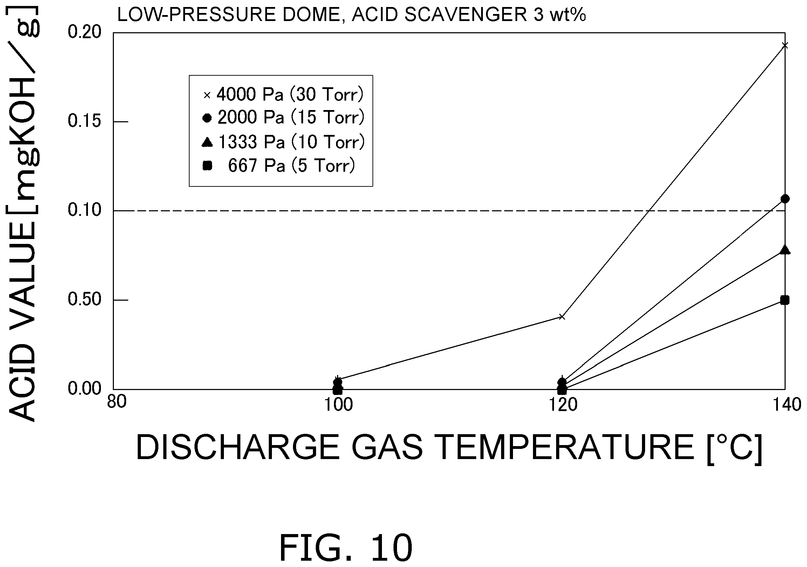

Fig. 10 shows a relationship between temperatures of the discharge gas discharged from the compressor 11a and acid values when the pressure of air was varied in the refrigerant circuit 10 included in the air conditioning apparatus 1 in the other embodiment J. Here, a mixed refrigerant (weight ratio is 40 parts by mass:60 parts by mass) of 1,2-difluoroethylene and HFO-1234yf was used as the refrigerant, a refrigerating machine oil (PVE) in which 3.0 wt% of an epoxy-based acid scavenger was blended as the acid scavenger was used, and the refrigerating machine oil after 2000 hours of a rated operation was measured in accordance with the regulation in JIS K 2211.

As shown in Fig. 10, in the air conditioning apparatus 1 using the low-pressure dome-type compressor 11a in the other embodiment J, the acid value is suppressed to be small compared with the air conditioning apparatus 1 using the high-pressure dome-type compressor 11 in the aforementioned embodiment, even when the discharge temperature is the same. This is considered to be because the temperature of the refrigerating machine oil stored in the oil reservoir 37a is suppressed to be low due to the oil reservoir 37a of the low-pressure dome-type compressor 11a being located on the low-pressure side with respect to the compression mechanism 40 and being subjected to the low-pressure refrigerant. Therefore, in particular, when the low-pressure dome-type compressor 11a is used, corrosion of the components of the refrigerant circuit 10 is suppressed.

For example, the air conditioning apparatus 1 using the low-pressure dome-type compressor 11a may be configured such that the pressure of air inside the refrigerant circuit 10 is 667 Pa or less, 3.0 wt% or more and 5.0 wt% or less of the acid scavenger is blended in the refrigerating machine oil, and the temperature of the refrigerating machine oil in the oil reservoir 37a is maintained at 140°C or lower. Furthermore the air conditioning apparatus 1 using the low-pressure dome-type compressor 11a may be configured such that the pressure of air inside the refrigerant circuit 10 is 1333 Pa or less, 3.0 wt% or more and 5.0 wt% or less of the acid scavenger is blended in the refrigerating machine oil, and the temperature of the refrigerating machine oil in the oil reservoir 37a is maintained at 140°C or lower. Furthermore, the air conditioning apparatus 1 using the low-pressure dome-type compressor 11a may be configured such that the pressure of air inside the refrigerant circuit 10 is 2000 Pa or less, 3.0 wt% or more and 5.0 wt% or less of the acid scavenger is blended in the refrigerating machine oil, and the temperature of the refrigerating machine oil in the oil reservoir 37a is maintained at 135°C or lower.

**REFERENCE SIGNS LIST**

1      air conditioning apparatus (refrigerant cycle apparatus)
5      gas-refrigerant connection pipe
6      liquid-refrigerant connection pipe

| 7 | control unit |
| 9 | expansion valve |
| 10 | refrigerant circuit |
| 11 | compressor |
| 11a | compressor |
| 13 | outdoor heat exchanger |
| 18 | indoor heat exchanger |
| 21 | compression mechanism (compression element) |
| 37 | oil reservoir |
| 37a | oil reservoir |
| 79 | oil-temperature detection sensor (temperature detection unit) |
| 93 | valve body |
| 93b | needle (needle portion) |

**Claims**

1. The use of at least one mixed refrigerant containing

   (i) 1,2-difluoroethylene (HFO-1132) and at least one hydrofluorocarbon; or
   (ii) HFO-1132 and at least one hydrofluoroolefin;

   as a refrigerant in a refrigeration cycle apparatus (1) comprising a refrigerant circuit (10) including a compressor (11, 11a) including

      - a compression element (21) that compresses the refrigerant, and
      - an oil reservoir (37, 37a) that stores a refrigerating machine oil;

   wherein

      (1) the refrigerating machine oil contains 3.0-5.0 wt.% of an acid scavenger, the temperature of the oil in the reservoir is maintained at $\leq 120°C$, and the pressure of air inside the refrigerant circuit (10) is $\leq 667$ Pa; or
      (2) the refrigerating machine oil contains 0 to < 3.0 wt% of an acid scavenger, the temperature of the oil in the reservoir (37, 37a) is maintained at $\leq 100°C$, and the pressure of air inside the refrigerant circuit (10) is $\leq 1333$ Pa; or
      (3) the refrigerating machine oil contains 3.0-5.0 wt% of an acid scavenger, the temperature of the oil in the reservoir (37, 37a) is maintained at $\leq 100°C$, and the pressure of air inside the refrigerant circuit (10) is $\leq 2000$ Pa; or
      (4) the refrigerating machine oil contains 0 to < 3.0 wt% of an acid scavenger, the temperature of the oil in the reservoir (37, 37a) is maintained at $\leq 80°C$, and the pressure of air inside the refrigerant circuit (10) is $\leq 2000$ Pa; or
      (5) the refrigerating machine oil contains 3.0-5.0 wt% of an acid scavenger, the temperature of the oil in the reservoir (37, 37a) is maintained at $\leq 80°C$, and the pressure of air inside the refrigerant circuit (10) is $\leq 4000$ Pa.

2. The use of claim 1, wherein the temperature of the refrigerating machine oil ($T_{oil}$) in the oil reservoir (37, 37a) is maintained to be $\leq$ the value obtained by substituting the pressure of the air inside the refrigerant circuit (10, $P_{air}$) into the equation

$$0.1 = (1.066576 \times 10^{-2} \times P_{air} [Pa] + 0.0017] \times (T_{oil} [°C]) + (-0.4266304 \times P_{air} [Pa] - 0.15)$$

3. The use of claim 1 or 2, wherein the refrigerating machine oil includes at least one of polyvinyl ether and polyol ester.

4. The use of any of claims 1-3, wherein the amount of moisture inside the refrigerant circuit, based on the amount of the refrigerant enclosed in the refrigerant circuit (10), is $\leq 300$ ppm.

5. The use of any of claims 1-4, wherein the refrigerant circuit (10) has an expansion valve (9) including a needle portion (93b) made of SUS or brass.

6. The use of any of claims 1-5, wherein the refrigerant is one of a refrigerant made of (i) HFO-1132 and R32 and/or HFO-1234yf, or (ii) HFO-1234yf, HFO-1234ze, HFO-1233zd and hydrofluorocarbon.

7. The use of any of claims 1-6, wherein the refrigeration cycle apparatus (1) comprises a temperature detection unit (79) that detects the temperature of the refrigerating machine oil in the oil reservoir (37, 37a), and the number of rotations of the compressor is controlled based on a result of detection by the temperature detection unit (79).

**Patentansprüche**

1. Verwendung von mindestens einem Mischkältemittel, das Folgendes enthält:

   (i) 1,2-Difluorethen (HFO-1132) und mindestens einen Hydrofluorkohlenwasserstoff; oder
   (ii) HFO-1132 und mindestens ein Hydrofluorolefin;

   als Kältemittel in einer Kältekreislaufeinrichtung (1), die einen Kältemittelkreislauf (10) umfasst, der einen Kompressor (11, 11a) einschließt, einschließlich

   - ein Verdichtungselement (21), das das Kältemittel verdichtet, und
   - ein Ölreservoir (37, 37a), das ein Kältemaschinenöl speichert;

   wobei

   (1) das Kältemaschinenöl 3,0-5,0 Gew.-% eines Säurefängers enthält, die Temperatur des Öls im Reservoir bei $\leq 120°C$ gehalten wird und der Druck der Luft innerhalb des Kältemittelkreislaufs (10) $\leq 667$ Pa beträgt; oder
   (2) das Kältemaschinenöl 0 bis < 3,0 Gew.-% eines Säurefängers enthält, die Temperatur des Öls im Reservoir (37, 37a) bei $\leq 100°C$ gehalten wird und der Druck der Luft innerhalb des Kältemittelkreislaufs (10) $\leq 1333$ Pa beträgt; oder
   (3) das Kältemaschinenöl 3,0-5,0 Gew.-% eines Säurefängers enthält, die Temperatur des Öls im Reservoir (37, 37a) bei $\leq 100°C$ gehalten wird und der Druck der Luft innerhalb des Kältemittelkreislaufs (10) $\leq 2000$ Pa beträgt; oder
   (4) das Kältemaschinenöl 0 bis < 3,0 Gew.-% eines Säurefängers enthält, die Temperatur des Öls im Reservoir (37, 37a) bei $\leq 80°C$ gehalten wird und der Druck der Luft innerhalb des Kältemittelkreislaufs (10) $\leq 2000$ Pa beträgt; oder
   (5) das Kältemaschinenöl 3,0-5,0 Gew.-% eines Säurefängers enthält, die Temperatur des Öls im Reservoir (37, 37a) bei $\leq 80°C$ gehalten wird und der Druck der Luft innerhalb des Kältemittelkreislaufs (10) $\leq 4000$ Pa beträgt.

2. Verwendung nach Anspruch 1, wobei die Temperatur des Kältemaschinenöls ($T_{oil}$) im Ölreservoir (37, 37a) so gehalten wird, dass sie $\leq$ dem durch Ersetzen des Drucks der Luft innerhalb des Kältemittelkreislaufs (10, $P_{air}$) in die Gleichung erhaltenen Wert ist

$$0,1 = (1,066576 \times 10^{-2} \times P_{air} [Pa] + 0,0017] \times$$
$$(T_{oil} [°C]) + (-0,4266304 \times P_{air} [Pa] - 0,15)$$

3. Verwendung nach Anspruch 1 oder 2, wobei das Kältemaschinenöl mindestens eines von Polyvinylether und Polyolester einschließt.

4. Verwendung nach einem der Ansprüche 1-3, wobei die Feuchtigkeitsmenge innerhalb des Kältemittelkreislaufs, basierend auf der Menge des in dem Kältemittelkreislauf (10) eingeschlossenen Kältemittels, $\leq 300$ ppm beträgt.

5. Verwendung nach einem der Ansprüche 1-4, wobei der Kältemittelkreislauf (10) ein Expansionsventil (9) aufweist, das einen Nadelabschnitt (93b) aus SUS oder Messing einschließt.

**6.** Verwendung nach einem der Ansprüche 1-5, wobei das Kältemittel eines ist von einem Kältemittel, das hergestellt ist aus einem von (i) HFO-1132 und R32 und/oder HFO-1234yf, oder (ii) HFO-1234yf, HFO-1234ze, HFO-1233zd und einem Hydrofluorkohlenwasserstoff.

**7.** Verwendung nach einem der Ansprüche 1-6, wobei die Kältekreislaufeinrichtung (1) eine Temperaturerfassungseinheit (79) umfasst, die die Temperatur des Kältemaschinenöls im Ölreservoir (37, 37a) erfasst, und die Anzahl der Umdrehungen des Kompressors basierend auf einem Ergebnis der Erfassung durch die Temperaturerfassungseinheit (79) gesteuert wird.

## Revendications

**1.** Utilisation d'au moins un fluide frigorigène mixte contenant

(i) du 1,2-difluoroéthylène (HFO-1132) et au moins un hydrofluorocarbone ; ou
(ii) du HFO-1132 et au moins une hydrofluorooléfine ;

en tant que fluide frigorigène dans un appareil à cycle frigorifique (1) comprenant un circuit de fluide frigorigène (10) incluant un compresseur (11, 11a) incluant

- un élément de compression (21) qui comprime le fluide frigorigène, et
- un réservoir d'huile (37, 37a) qui stocke une huile pour machine frigorifique ;

dans laquelle

(1) l'huile pour machine frigorifique contient de 3,0 à 5,0 % en poids d'un piégeur d'acide, la température de l'huile dans le réservoir est maintenue à ≤ 120 °C, et la pression de l'air à l'intérieur du circuit de fluide frigorigène (10) est ≤ 667 Pa ; ou
(2) l'huile pour machine frigorifique contient de 0 à < 3,0 % en poids d'un piégeur d'acide, la température de l'huile dans le réservoir (37, 37a) est maintenue à ≤ 100 °C, et la pression de l'air à l'intérieur du circuit de fluide frigorigène (10) est ≤ 1333 Pa ; ou
(3) l'huile pour machine frigorifique contient de 3,0 à 5,0 % en poids d'un piégeur d'acide, la température de l'huile dans le réservoir (37, 37a) est maintenue à ≤ 100 °C, et la pression de l'air à l'intérieur du circuit de fluide frigorigène (10) est ≤ 2000 Pa ; ou
(4) l'huile pour machine frigorifique contient de 0 à < 3,0 % en poids d'un piégeur d'acide, la température de l'huile dans le réservoir (37, 37a) est maintenue à ≤ 80 °C, et la pression de l'air à l'intérieur du circuit de fluide frigorigène (10) est ≤ 2000 Pa ; ou
(5) l'huile pour machine frigorifique contient de 3,0 à 5,0 % en poids d'un piégeur d'acide, la température de l'huile dans le réservoir (37, 37a) est maintenue à ≤ 80 °C, et la pression de l'air à l'intérieur du circuit de fluide frigorigène (10) est ≤ 4000 Pa.

**2.** Utilisation selon la revendication 1, dans laquelle la température de l'huile pour machine frigorifique ($T_{oil}$) dans le réservoir d'huile (37, 37a) est maintenue pour être ≤ la valeur obtenue en substituant la pression de l'air à l'intérieur du circuit de fluide frigorigène (10, $P_{air}$) dans l'équation

$$0,1 = (1,066576 \times 10^{-2} \text{ X } P_{air} \text{ [Pa] } + 0,0017] \text{ X } (T_{oil} \text{ [°C]}) + (-0,4266304 \times P_{air} \text{ [Pa] } - 0,15)$$

**3.** Utilisation selon la revendication 1 ou la revendication 2, dans laquelle l'huile pour machine frigorifique inclut au moins un parmi l'éther polyvinylique et l'ester de polyol.

**4.** Utilisation selon l'une quelconque des revendications 1 à 3, dans laquelle la quantité d'humidité à l'intérieur du circuit de fluide frigorigène, par rapport à la quantité de fluide frigorigène enfermée dans le circuit de fluide frigorigène (10), est ≤ 300 ppm.

**5.** Utilisation selon l'une quelconque des revendications 1 à 4, dans laquelle le circuit de fluide frigorigène (10) présente une vanne d'expansion (9) incluant une partie d'aiguille (93b) faite de SUS ou de laiton.

6. Utilisation selon l'une quelconque des revendications 1 à 5, dans laquelle le fluide frigorigène est l'un parmi un fluide frigorigène fait de (i) HFO-1132 et R32 et/ou HFO-1234yf, ou (ii) HFO-1234yf, HFO-1234ze, HFO-1233zd et un hydrofluorocarbone.

7. Utilisation selon l'une quelconque des revendications 1 à 6, dans laquelle l'appareil à cycle frigorifique (1) comprend une unité de détection de température (79) qui détecte la température de l'huile pour machine frigorifique dans le réservoir d'huile (37, 37a), et le nombre de rotations du compresseur est commandé sur la base d'un résultat de détection par l'unité de détection de température (79).

FIG. 1

FIG. 2

EP 4 450 894 B1

# FIG. 3

# FIG. 4

FIG. 5

EP 4 450 894 B1

FIG. 6

FIG. 7

FIG. 8

FIG. 9

EP 4 450 894 B1

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019196312 A
- JP 202136193 A
- WO 2020008520 A1
- WO 2020255966 A1